# FASCICULE DE BREVET EUROPEEN

(11) **EP 4 558 588 B1**
(45) Date de publication et mention de la délivrance du brevet: **13.05.2026**
(21) Numéro de dépôt: 23735748.8
(22) Date de dépôt: 28.06.2023
(51) Int. Cl.: C10G 45/08, C10G 45/50, C10G 45/54, C10G 65/08, B01J 27/14, C10G 11/18, C10G 69/04, B01J 23/888, C10G 47/00, C10G 65/12

(54) **PROCÉDÉ D'HYDROTRAITEMENT METTANT EN OEUVRE UN ENCHAÎNEMENT DE CATALYSEURS AVEC UN CATALYSEUR À BASE DE NICKEL ET TUNGSTÈNE SUR UN SUPPORT SILICE-ALUMINE**
HYDROBEHANDLUNGSVERFAHREN UNTER VERWENDUNG EINER SEQUENZ VON KATALYSATOREN MIT EINEM KATALYSATOR AUF DER BASIS VON NICKEL UND WOLFRAM AUF EINEM SILICIUMDIOXID-ALUMINIUMOXID-TRÄGER
HYDROTREATMENT PROCESS USING A SEQUENCE OF CATALYSTS WITH A CATALYST BASED ON NICKEL AND TUNGSTEN ON A SILICA-ALUMINA SUPPORT

(30) Priorité: 20.07.2022 FR 2207440
(43) Date de publication de la demande: 28.05.2025
(73) Titulaire: IFP Energies nouvelles, 92500 Rueil-Malmaison (FR)
(72) Inventeur: CORRE, Thibaut, 92852 Rueil-Malmaison CEDEX (FR); BERTRAND DRIRA, Chloe, 92852 Rueil-Malmaison CEDEX (FR); GAY, Anne-Sophie, 92852 Rueil-Malmaison CEDEX (FR); MERDRIGNAC, Isabelle, 92852 Rueil-Malmaison CEDEX (FR)
(74) Mandataire: IFP Energies nouvelles
(86) Numéro de dépôt international: PCT/EP2023/067561
(87) Numéro de publication internationale: WO 2024/017584

(56) Documents cités:
- WO-A1-2022/002641
- FR-A1- 3 013 720
- FR-A1- 3 105 931

## Description

### Domaine technique

L'invention concerne un procédé d'hydrotraitement d'une charge hydrocarbonée mettant en oeuvre un enchaînement d'au moins deux catalyseurs spécifiques. L'objectif du procédé est la production de charges hydrocarbonées hydrodésulfurés, hydrodéazotés et hydrodéaromatisés.

Les catalyseurs d'hydrotraitement classiques comprennent généralement un support d'oxyde et une phase active à base de métaux des groupes VIB et VIII sous leurs formes oxydes ainsi que du phosphore. La préparation de ces catalyseurs comprend généralement une étape d'imprégnation des métaux et du phosphore sur le support, suivie d'un séchage et d'une calcination permettant d'obtenir la phase active sous leurs formes oxydes. Avant leur utilisation dans une réaction d'hydrotraitement et/ou d'hydrocraquage, ces catalyseurs sont généralement soumis à une sulfuration afin de former l'espèce active.

L'ajout d'un composé organique sur les catalyseurs d'hydrotraitement pour améliorer leur activité a été préconisé par l'Homme du métier, notamment pour des catalyseurs qui ont été préparés par imprégnation suivie d'un séchage sans calcination ultérieure. Ces catalyseurs sont souvent appelés « catalyseurs séchés additivés ».

Habituellement, un catalyseur d'hydrotraitement de coupes hydrocarbonées a pour but d'éliminer les composés soufrés, azotés ou aromatiques contenus dans celles-ci afin de mettre par exemple un produit pétrolier aux spécifications requises (teneur en soufre, teneur en aromatiques etc...) pour une application donnée (carburant automobile, essence ou gazole, fioul domestique, carburéacteur).

En raison du resserrement de la législation sur la qualité de l'air dans de nombreux pays, des efforts continus sont déployés pour développer des catalyseurs et des procédés plus efficaces pour la production de carburants à très faible teneur en soufre. Bien que de grands progrès aient été réalisés dans le développement de catalyseurs efficaces pour ces procédés, des défis majeurs demeurent, par exemple, leur modeste activité de saturation en hydrocarbures aromatiques ou en hydrodéazotation.

La baisse de la teneur en soufre, en azote et en aromatiques est ainsi recherchée dans le domaine du prétraitement pour un procédé d'hydrocraquage ou pour un procédé de craquage catalytique à lit fluidisé (ou procédé FCC pour Fluid Catalytic Cracking selon la terminologie anglo-saxonne) pour améliorer les performances dans les étapes ultérieures d'hydrocraquage ou de FCC. Ces procédés traitent généralement des charges fortement chargées en soufre, azote et aromatiques.

Cependant, un catalyseur d'hydrotraitement optimisé pour l'hydrodésulfuration (HDS) n'est pas automatiquement optimisé pour la saturation des aromatiques (ou hydrodéaromatisation HDA) ou pour l'hydrodéazotation (HDN) et vice versa. On fait ainsi souvent appel à des enchaînements de catalyseurs dans lesquels chaque catalyseur est optimisé pour un type d'hydrotraitement.

De tels enchaînements de catalyseurs supportés sont par exemple décrits dans les documents US2011/0079542, US5068025, CN1176290, FR3013720 ou FR3013721.

Il existe aussi des enchaînements de catalyseurs non supportés, aussi appelé catalyseurs «bulk» selon la terminologie anglo-saxonne et connus par exemples des documents US7816299 ou CN102851070. L'enchaînement de catalyseurs supportés présente cependant l'avantage d'utiliser des catalyseurs régénérables qui sont en plus moins coûteux (car moins chargés en métaux) et qui sont aussi actifs avec une teneur en métaux moins élevée.

Le document US2003/0116473 divulgue un procédé d'hydrotraitement utilisant un enchaînement d'un catalyseur supporté à base de molybdène suivi d'un catalyseur supporté à base de tungstène. Ce document ne divulgue pas de répartition volumique des deux zones catalytiques.

Le document CN105435824 divulgue un procédé d'hydrotraitement utilisant un enchaînement d'un catalyseur supporté CoMoP additivé à l'acide citrique suivi d'un catalyseur supporté NiMoWP. Le volume du premier catalyseur est compris entre 5 et 95 % et le volume du deuxième catalyseur est compris entre 95 et 5 %. On observe une augmentation en HDS et en HDN.

Quel que soit l'enchainement de catalyseurs choisi, les modifications induites ne permettent pas toujours d'accroître suffisamment les performances du système catalytique pour faire face aux spécifications concernant les teneurs en soufre, azote et/ou aromatiques des carburants. En conséquence, il ressort comme indispensable, pour les raffineurs de trouver de nouveaux procédés d'hydrotraitement à performances améliorées en termes d'activité et de stabilité.

La demanderesse a développé un procédé d'hydrotraitement d'une charge hydrocarbonée comprenant la mise en contact de ladite charge avec un enchaînement spécifique de catalyseurs permettant d'accroitre l'activité globale et la stabilité globale du procédé.

### Résumé

L'invention concerne un procédé d'hydrotraitement d'une charge hydrocarbonée tel que décrit dans les revendications annexées.

La demanderesse a découvert de manière surprenante qu'un enchainement d'une première section réactionnelle d'hydrotraitement contenant un premier catalyseur à base d'une phase active constituée de nickel et de molybdène sur un support d'alumine et d'une deuxième section réactionnelle d'hydrotraitement contenant un deuxième catalyseur à base d'une phase active constituée de nickel et de tungstène sur un support plus acide en présence de phosphore et d'un composé organique présente un effet synergique en termes d'activité et de stabilité en hydrotraitement, notamment en hydrogénation des aromatiques (HDA) mais également en hydrodéazotation (HDN) et/ou en hydrodésulfuration (HDS).

En effet, le choix de la bonne phase active, d'un support adapté, de la présence de phosphore et/ou d'un composé organique pour chaque catalyseur permet d'observer une symbiose du premier catalyseur à base d'une phase active constituée de nickel et de molybdène sur un support non ou peu acide (alumine), effectuant notamment l'HDS et une partie de l'HDN, suivi du deuxième catalyseur à base d'une phase active constituée de nickel et de tungstène en présence de phosphore et d'un composé organique sur un support plus acide (silice-alumine), permettant la modification de la structure des composés aromatiques les plus réfractaires (par réactions d'isomérisation et/ou craquage), rendant ces molécules plus réactives, favorisant ainsi l'HDA prérequis pour augmenter l'HDN, notamment grâce au tungstène qui apporte un gain d'activité hydrogénante.

D'un côté, le deuxième catalyseur se montre très actif, notamment en HDA et HDN, ce qui permet de compléter les réactions d'hydrotraitement, notamment HDS et HDN, du premier catalyseur nécessaires pour atteindre les spécifications. De même, la stabilité est augmentée, car la durée de cycle est prolongée grâce à la réduction de température nécessaire pour faire les réactions d'HDS, d'HDN et d'HDA.

D'un autre côté, le deuxième catalyseur se désactive moins rapidement, ce qui permet d'autant plus d'accroître la durée de cycle sur une charge standard ou de permettre le traitement de charges fortement chargées en soufre, azote et/ou aromatiques.

Le procédé d'hydrotraitement selon l'invention est particulièrement adapté pour une charge de distillat sous vide. Le procédé d'hydrotraitement selon l'invention est également particulièrement adapté pour l'hydrotraitement de charges comprenant des teneurs élevées en azote et en aromatiques, telles que des charges issues du craquage catalytique, du coker ou de la viscoréduction.

Le procédé selon la présente invention permet de produire une coupe hydrocarbonée hydrotraitée, c'est-à-dire à la fois débarrassée des composés azotés, des composés soufrés et de la plupart des composés aromatiques. De préférence selon le procédé selon l'invention la conversion en hydrodésulfuration (HDS) est supérieure à 95 %, de préférence supérieure à 98 %. De préférence, selon le procédé selon l'invention la conversion en hydrodéazotation (HDN) est supérieure à 90 %, de préférence supérieure à 95 %. De préférence, selon le procédé selon l'invention la conversion en hydrogénation des aromatiques (HDA) est supérieure à 35 %, de préférence supérieure à 40 %.

Selon une variante, ladite première section réactionnelle d'hydrotraitement contenant le premier catalyseur occupe un volume V1, et ladite deuxième section réactionnelle d'hydrotraitement contenant le deuxième catalyseur occupe un volume V2, la répartition des volumes V1/V2 étant comprise entre 50%vol/50%vol et 90%vol/10%vol respectivement.

La répartition volumique des deux catalyseurs, notamment le fait que la deuxième section réactionnelle contenant le deuxième catalyseur occupe un volume moins important que la première section réactionnelle contenant le premier catalyseur, permet d'optimiser les réactions d'HDS, d'HDN et d'HDA effectuées dans la première ou deuxième section réactionnelle afin d'obtenir des coupes hydrocarbonées aux spécifications tout en augmentant l'activité et la stabilité du système catalytique par rapport à un système ne contenant qu'un seul des catalyseurs.

Selon une variante, la répartition des volumes V1/V2 est comprise entre 70%vol/30%vol et 80%vol/20%vol respectivement de ladite première et deuxième section réactionnelle d'hydrotraitement.

Le deuxième catalyseur est caractérisé en ce que :
- la teneur en nickel, exprimée sous forme NiO, est comprise entre 1,3 et 4,3 % poids par rapport au poids total du catalyseur,
- la teneur en tungstène, exprimée sous forme WO₃, est comprise entre 17 et 31 % poids par rapport au poids total du catalyseur,
- la teneur en phosphore, exprimée sous forme P₂O₅, est de préférence comprise entre 1,3 et 3,4 % poids par rapport au poids total du catalyseur.

Le deuxième catalyseur est en outre caractérisé en ce que :
- le ratio molaire Ni/W est compris entre 0,18 et 0,45 mol/mol,
- le ratio molaire P/W est compris entre 0,18 et 0,45 mol/mol.

Selon une variante, la teneur en silice dans le support du deuxième catalyseur est comprise entre 10 et 50% pds par rapport au poids total du support.

Le premier catalyseur a une teneur en molybdène comprise entre 5 et 40 % poids, exprimée en MoO₃, par rapport au poids total du catalyseur et une teneur en nickel comprise entre 1 et 10 % poids, exprimée en NiO, par rapport au poids total du catalyseur.

Le premier catalyseur comprend en outre du phosphore a une teneur comprise entre 0,1 et 20 % poids exprimée en P₂O₅ par rapport au poids total du catalyseur. Selon une variante, le premier catalyseur contient en outre un composé organique contenant de l'oxygène et/ou de l'azote et/ou du soufre.

Selon une variante, le composé organique est choisi parmi un composé comportant une ou plusieurs fonctions chimiques choisies parmi une fonction carboxylique, alcool, thiol, thioéther, sulfone, sulfoxyde, éther, aldéhyde, cétone, ester, carbonate, amine, nitrile, imide, oxime, urée, amide ou encore les composés incluant un cycle furanique ou encore un sucre, et de préférence il est choisi parmi la γ-valérolactone, la 2-acétylbutyrolactone, le triéthylèneglycol, le diéthylèneglycol, l'éthylèneglycol, l'acide éthylènediaminetétra-acétique (EDTA), l'acide maléique, l'acide malonique, l'acide citrique, l'acide acétique, l'acide oxalique, l'acide gluconique, le glucose, le fructose, le saccharose, le sorbitol, le xylitol, l'acide γ-cétovalérique, un succinate de dialkyle C1-C4 et plus particulièrement le succinate de diméthyle, le diméthylformamide, la 1-méthyl-2-pyrrolidinone, le carbonate de propylène, le 3-oxobutanoate de 2-méthoxyéthyle, la bicine, la tricine, le 2-furaldéhyde (aussi connu sous le nom furfural), le 5-hydroxyméthylfurfural, le 2-acétylfurane, le 5-méthyl-2-furaldéhyde, l'acide ascorbique, le lactate de butyle, le lactate d'éthyle, le butyryllactate de butyle, le 3-hydroxybutanoate d'éthyle, le 3-éthoxypropanoate d'éthyle, l'acétate de 2-éthoxyéthyle, l'acétate de 2-butoxyéthyle, l'acrylate de 2-hydroxyéthyle, la 1-vinyl-2-pyrrolidinone, la 1,3-diméthyl-2-imidazolidinone, le 1,5-pentanediol, la1-(2-hydroxyéthyl)-2-pyrrolidinone, la 1-(2-hydroxyéthyl)-2,5-pyrrolidinedione, la 5-méthyl-2(3H)-furanone, la 1-méthyl-2-pipéridinone, l'acide 4-aminobutanoïque, le glycolate de butyle, le 2-mercaptopropanoate d'éthyle, le 4-oxopentanoate d'éthyle, le maléate de diéthyle, le maléate de diméthyle, le fumarate de diméthyle, le fumarate de diéthyle, l'adipate de diméthyle et le 3-oxoglutarate de diméthyle.

Selon une variante, la teneur en composé organique est comprise entre 1 et 30 % poids par rapport au poids total du catalyseur.

Selon une variante, le premier et/ou le deuxième catalyseur est au moins partiellement sulfuré.

Selon une variante, le procédé d'hydrotraitement est mis en oeuvre comme prétraitement dans un procédé de craquage catalytique à lit fluidisé.

Selon une variante, le procédé d'hydrotraitement est mis en oeuvre comme prétraitement dans un procédé d'hydrocraquage.

### Description détaillée de l'invention

### Définitions

Selon la présente invention, les expressions « compris entre ... et ... » et « entre .... et ... » sont équivalentes et signifient que les valeurs limites de l'intervalle sont incluses dans la gamme de valeurs décrite. Si tel n'était pas le cas et que les valeurs limites n'étaient pas incluses dans la gamme décrite, une telle précision sera apportée par la présente invention.

Dans le sens de la présente invention, les différentes plages de paramètres pour une étape donnée telles que les plages de pression et les plages de température peuvent être utilisées seules ou en combinaison. Par exemple, dans le sens de la présente invention, une plage de valeurs préférées de pression peut être combinée avec une plage de valeurs de température plus préférées.

Dans la suite, des modes de réalisation particuliers et/ou préférés de l'invention peuvent être décrits. Ils pourront être mis en oeuvre séparément ou combinés entre eux, sans limitation de combinaison lorsque c'est techniquement réalisable.

Selon la présente invention, les pressions sont des pressions absolues, encore notées abs., et sont données en MPa absolus (ou MPa abs.), sauf indication contraire.

Dans la suite, les groupes d'éléments chimiques sont donnés selon la classification CAS (CRC Handbook of Chemistry and Physics, éditeur CRC press, rédacteur en chef D.R. Lide, 81^{ème} édition, 2000-2001). Par exemple, le groupe VIII selon la classification CAS correspond aux métaux des colonnes 8, 9 et 10 selon la nouvelle classification IUPAC.

On entend par surface spécifique, la surface spécifique BET (S_{BET} en m²/g) déterminée par adsorption d'azote conformément à la norme ASTM D 3663-78 établie à partir de la méthode BRUNAUER-EMMETT-TELLER décrite dans le périodique *"The Journal of American Society",* 1938, 60, 309.

On entend par volume poreux total du catalyseur ou du support utilisé pour la préparation du catalyseur le volume mesuré par intrusion au porosimètre à mercure selon la norme ASTM D4284-83 à une pression maximale de 4000 bar (400 MPa), utilisant une tension de surface de 484 dyne/cm et un angle de contact de 140°. L'angle de mouillage a été pris égal à 140° en suivant les recommandations de l'ouvrage « Techniques de l'ingénieur, traité analyse et caractérisation », pages 1050-1055, écrit par Jean Charpin et Bernard Rasneur. Afin d'obtenir une meilleure précision, la valeur du volume poreux total correspond à la valeur du volume poreux total mesuré par intrusion au porosimètre à mercure mesurée sur l'échantillon moins la valeur du volume poreux total mesuré par intrusion au porosimètre à mercure mesurée sur le même échantillon pour une pression correspondant à 30 psi (environ 0,2 MPa).

Les teneurs en métaux du groupe VIII et du groupe VIB sont mesurées par fluorescence X.

Les teneurs en métal du groupe VIB, en métal du groupe VIII et en phosphore dans le catalyseur sont exprimées en oxydes après correction de la perte au feu de l'échantillon de catalyseur à 550°C pendant deux heures en four à moufle. La perte au feu est due à la perte de composés volatiles. Elle est déterminée selon l'ASTM D7348.

On entend par hydrotraitement des réactions englobant notamment l'hydrodésulfuration (HDS), l'hydrodéazotation (HDN) et l'hydrogénation des aromatiques (HDA).

### La charge

La charge mise en œuvre dans le procédé d'hydrocraquage selon l'invention est une charge hydrocarbonée dont au moins 50% poids des composés présentent un point d'ébullition initial supérieur à 300°C et un point d'ébullition final inférieur à 650°C, de préférence dont au moins 60% poids, de manière préférée dont au moins 75% poids et de manière plus préférée dont au moins 80% poids des composés, présentent un point d'ébullition initial supérieur à 300°C et un point d'ébullition final inférieur à 650°C. Lesdites charges ont de préférence un point d'ébullition T5 supérieur à 300°C, de préférence supérieur à 340°C, c'est à dire que 95% des composés présents dans la charge ont un point d'ébullition supérieur à 300°C, et de manière préférée supérieur à 340°C.

Des charges très variées peuvent être traitées par les procédés d'hydrocraquage selon l'invention. La charge hydrocarbonée est avantageusement choisie parmi les HCO (Heavy Cycle Oil selon la terminologie anglo-saxonne (gazoles lourds issus d'une unité de craquage catalytique)), les distillats sous vide, par exemple gasoils issus de la distillation directe du brut ou d'unités de conversion telles que le craquage catalytique, le coker ou la viscoréduction, les charges provenant d'unités d'extraction d'aromatiques, des bases d'huile lubrifiante ou issues du déparaffinage au solvant des bases d'huile lubrifiante, les distillats provenant de procédés de désulfuration ou d'hydroconversion en lit fixe ou en lit bouillonnant de résidus atmosphériques et/ou de résidus sous vide et/ou d'huiles désasphaltées, ou encore la charge peut être une huile désasphaltée ou comprendre des huiles végétales ou bien encore provenir de la conversion de charges issues de la biomasse. Elle peut aussi être des paraffines issues du procédé Fischer-Tropsch. Ladite charge hydrocarbonée traitée selon le procédé d'hydrocraquage de l'invention peut encore être un mélange desdites charges précédemment citées. De préférence, la charge est un distillat sous vide.

Les charges qui sont traitées, et en particulier celles citées ci-dessus, contiennent généralement des hétéroatomes tels que le soufre, l'oxygène et l'azote et, pour les charges lourdes, elles contiennent le plus souvent également des métaux.

La teneur en azote des charges traitées dans les procédés selon l'invention est généralement supérieure à 500 ppm poids, de préférence comprise entre 500 et 10000 ppm poids, de manière plus préférée entre 700 et 4000 ppm poids et de manière encore plus préférée entre 1000 et 4000 ppm poids.

La teneur en soufre des charges traitées dans les procédés selon l'invention est généralement comprise entre 0,01 et 5% poids, de manière préférée comprise entre 0,2 et 4% poids et de manière encore plus préférée entre 0,5 et 3 % poids.

Ladite charge hydrocarbonée peut éventuellement contenir des métaux, en particulier du nickel et du vanadium. La teneur cumulée en nickel et vanadium de ladite charge hydrocarbonée, est de préférence inférieure à 50 ppm poids, de manière préférée inférieure à 25 ppm, de manière encore plus préférée inférieure à 10 ppm.

Ladite charge hydrocarbonée peut éventuellement contenir des asphaltènes. La teneur en asphaltènes de ladite charge hydrocarbonée est généralement inférieure à 3000 ppm, de manière préférée inférieure à 1000 ppm, de manière encore plus préférée inférieure à 200 ppm.

Ladite charge hydrocarbonée peut éventuellement contenir des résines. La teneur en résines peut être supérieure à 1% pds, en particulier supérieure à 5% pds. La mesure de la teneur en résines s'effectue selon la norme ASTM D 2007-11. La charge hydrocarbonée peut aussi contenir très peu de résines (inférieure à 1% pds).

La charge hydrocarbonée peut être de nature chimique quelconque, c'est à dire posséder en dehors de la teneur en aromatiques décrites ci-dessous une répartition quelconque entre les différentes familles chimiques choisies parmi les paraffines, oléfines et naphtènes.

La teneur en aromatiques dans la charge est supérieure ou égale à 20% poids, de préférence elle est comprise entre 25 et 90% poids, de manière plus préférée entre 30 et 80% poids. La teneur en aromatiques est déterminée selon la méthode décrite dans la publication Burdett R.A, Taylor L.W et Jones L.C, Journal of Molecular Spectroscopy, Rept. Conf., Inst. Petroleum, London 1954, 30-41 (Pub. 1955).

### La mise en œuvre du procédé et les conditions opératoires

Le procédé selon l'invention peut être effectué en un, deux ou plusieurs réacteurs. Il est généralement effectué en lit fixe.

Lorsque le procédé selon l'invention est effectué en deux réacteurs, l'étape a) peut être effectuée dans le premier réacteur contenant la première section réactionnelle traversée par la charge, puis l'étape b) peut être effectuée dans le deuxième réacteur contenant la deuxième section réactionnelle, placé en aval du premier réacteur. Optionnellement, l'effluent de l'étape a) sortant du premier réacteur peut être soumis à une étape de séparation permettant de séparer une fraction légère contenant notamment le H₂S et le NH₃ formés lors de l'hydrotraitement dans l'étape a) d'une fraction lourde contenant les hydrocarbures partiellement hydrotraités. La fraction lourde obtenue après l'étape de séparation est ensuite introduite dans le deuxième réacteur permettant d'effectuer l'étape b) du procédé selon l'invention. L'étape de séparation peut être effectuée par distillation, séparation flash ou toute autre méthode connue par l'homme du métier.

Lorsque le procédé est effectué dans un seul réacteur, l'étape a) est effectuée dans une première zone contenant la première section réactionnelle, et l'étape b) est effectuée dans une deuxième zone contenant la deuxième section réactionnelle en aval de la première zone.

Ladite première section réactionnelle d'hydrotraitement contenant le premier catalyseur occupe un volume V1, et ladite deuxième section réactionnelle d'hydrotraitement contenant le deuxième catalyseur occupe un volume V2, la répartition des volumes V1/V2 étant généralement comprise entre 50%vol/50%vol et 90%vol/10%vol, de préférence comprise entre 60 %vol/40%vol et 85%vol/15%vol et de manière particulièrement préférée comprise entre 70%vol/30%vol et 80%vol/20%vol, respectivement de ladite première et deuxième section réactionnelle d'hydrotraitement.

La répartition volumique des deux catalyseurs, notamment le fait que la deuxième section réactionnelle contenant le deuxième catalyseur occupe un volume moins important que la première section réactionnelle contenant le premier catalyseur, permet d'optimiser les réactions d'HDS, d'HDN et d'HDA effectuées dans la première ou la deuxième section réactionnelle. En effet, un volume du deuxième catalyseur trop grand ne permet pas l'abattement quantitatif des composés azotés, aboutissant ainsi à une inhibition de la réaction d'HDA. Inversement, un volume de deuxième catalyseur trop petit ne permet pas de maximiser la réaction d'HDA.

Les conditions opératoires utilisées dans les étapes a) ou b) du procédé d'hydrotraitement selon l'invention sont généralement les suivantes : la température est avantageusement comprise entre 180 et 450°C, et de préférence entre 250 et 440°C, la pression est avantageusement comprise entre 0,5 et 30 MPa, et de préférence entre 1 et 18 MPa, la vitesse volumique horaire est avantageusement comprise entre 0,1 et 20 h⁻¹ et de préférence entre 0,2 et 5 h⁻¹. La vitesse volumique horaire (VVH) est définie ici comme le ratio entre le débit volumique horaire de la charge hydrocarbonée par le volume de catalyseur(s). Le rapport hydrogène/charge exprimé en volume d'hydrogène, mesuré dans les conditions normales de température et pression, par volume de charge liquide est avantageusement compris entre 50 L/L à 5000 L/L et de préférence 80 à 2000 L/L.

Les conditions opératoires peuvent être identiques ou différentes dans les étapes a) et b). De préférence, elles sont identiques.

### Composition des catalyseurs mises en œuvre dans l'invention

Conformément à l'invention, le procédé d'hydrotraitement met en oeuvre un enchaînement d'un premier catalyseur comprenant un support d'alumine et une phase active constituée de nickel et de molybdène, et éventuellement du phosphore et/ou un composé organique, et d'un deuxième catalyseur comprenant un support à base de silice-alumine et une phase active constituée de nickel et de tungstène, du phosphore et un composé organique.

### Premier catalyseur

Le premier catalyseur comprend un support d'alumine et une phase active constituée de nickel, de molybdène et du phosphore.

Il peut en outre comprendre un composé organique, et éventuellement du bore et/ou du fluor.

La fonction hydrogénante dudit premier catalyseur, aussi appelée phase active, est assurée par le nickel et le molybdène.

De préférence, la teneur totale en nickel et molybdène est avantageusement supérieure à 6 % poids exprimée en oxyde par rapport au poids total du catalyseur.

La teneur en molybdène, exprimée sous forme MoO₃, est comprise entre 5 et 40 % poids, de préférence entre 8 et 39 % poids, et de manière plus préférée entre 10 et 38 % poids par rapport au poids total du catalyseur.

La teneur en nickel, exprimée sous forme NiO, est comprise entre 1 et 10 % poids, de préférence entre 1,5 et 9 % poids, et de manière plus préférée entre 2 et 8 % poids par rapport au poids total du catalyseur.

De préférence, le rapport molaire nickel sur molybdène dans le premier catalyseur est préférentiellement compris entre 0,1 et 0,8, de préférence compris entre 0,15 et 0,6 et de manière encore plus préférée compris entre 0,2 et 0,5.

Le premier catalyseur comprend également du phosphore en tant que dopant. Le dopant est un élément ajouté qui en lui-même ne présente aucun caractère catalytique mais qui accroit l'activité catalytique de la phase active.

La teneur en phosphore dans ledit catalyseur, exprimée sous forme P₂O₅, est comprise entre 0,1 et 20 % poids par rapport au poids total du catalyseur, de préférence entre 0,2 et 15 % poids, et de manière très préférée entre 0,3 et 11 % poids exprimé en P₂O₅.

Le rapport molaire phosphore sur molybdène dans le premier catalyseur est supérieur ou égal à 0,05, de préférence supérieur ou égal à 0,07, de préférence compris entre 0,08 et 1, de préférence compris entre 0,1 et 0,9 et de manière très préférée compris entre 0,15 et 0,8.

Le premier catalyseur peut avantageusement contenir en outre au moins un dopant choisi parmi le bore, le fluor et un mélange de bore et de fluor.

Lorsque le catalyseur contient du bore ou du fluor ou un mélange de bore et de fluor, la teneur en bore ou en fluor ou en mélange des deux est de préférence comprise entre 0,1 et 10 % poids exprimée en oxyde de bore et/ou en élément fluor par rapport au poids total du catalyseur, de préférence entre 0,2 et 7 % poids, et de manière très préférée comprise entre 0,2 et 5 % poids.

Le volume poreux dudit catalyseur est généralement compris entre 0,1 cm³/g et 1,5 cm³/g, de préférence compris entre 0,15 cm³/g et 1,1 cm³/g. Le volume poreux total est mesuré par porosimétrie au mercure selon la norme ASTM D4284 avec un angle de mouillage de 140°, telle que décrite dans l'ouvrage Rouquerol F. ; Rouquerol J. ; Singh K. « Adsorption by Powders & Porous Solids : Principle, methodology and applications », Academic Press, 1999, par exemple au moyen d'un appareil modèle Autopore III^{™} de la marque Micromeritics^{™}.

Le premier catalyseur se caractérise par une surface spécifique comprise entre 5 et 400 m²/g, de préférence comprise entre 10 et 350 m²/g, de préférence comprise entre 40 et 350 m²/g, de manière très préférée comprise entre 50 et 300 m²/g. La surface spécifique est déterminée dans la présente invention par la méthode B.E.T selon la norme ASTM D3663, méthode décrite dans le même ouvrage cité ci-dessus.

Le support comprend de l'alumine, et de préférence de l'alumine extrudée. De préférence, le support est constitué d'alumine, de préférence d'alumine gamma.

Le support d'alumine présente avantageusement un volume poreux total compris entre 0,1 et 1,5 cm³.g⁻¹, de préférence entre 0,4 et 1,1 cm³.g⁻¹. Le volume poreux total est mesuré par porosimétrie au mercure selon la norme ASTM D4284 avec un angle de mouillage de 140°, telle que décrite dans l'ouvrage Rouquerol F. ; Rouquerol J. ; Singh K. « Adsorption by Powders & Porous Solids : Principle, methodology and applications », Academic Press, 1999, par exemple au moyen d'un appareil modèle Autopore III^{™} de la marque Micromeritics^{™}.

La surface spécifique du support d'alumine est avantageusement comprise entre 5 et 400 m².g⁻¹, de préférence entre 10 et 350 m².g⁻¹, de manière plus préférée entre 40 et 350 m².g^{-1.}. La surface spécifique est déterminée dans la présente invention par la méthode B.E.T selon la norme ASTM D3663, méthode décrite dans le même ouvrage cité ci-dessus.

Le support se présente avantageusement sous forme de billes, d'extrudés, de pastilles ou d'agglomérats irréguliers et non sphériques dont la forme spécifique peut résulter d'une étape de concassage.

Le premier catalyseur peut en outre comprendre un composé organique ou un groupe de composés organiques connus pour leur rôle d'additifs. La fonction des additifs est d'augmenter l'activité catalytique par rapport aux catalyseurs non additivés. Plus particulièrement, le catalyseur peut en outre comprendre un ou plusieurs composés organiques contenant de l'oxygène et/ou un ou plusieurs composés organiques contenant de l'azote et/ou un ou plusieurs composés organiques contenant du soufre. De préférence, le catalyseur peut en outre comprendre un ou plusieurs composés organiques contenant de l'oxygène et/ou un ou plusieurs composés organiques contenant de l'azote. De préférence, le composé organique contient au moins 2 atomes de carbone et au moins un atome d'oxygène et/ou d'azote, sans contenir d'autres hétéroatomes.

Généralement, le composé organique est choisi parmi un composé comportant une ou plusieurs fonctions chimiques choisies parmi une fonction carboxylique, alcool, thiol, thioéther, sulfone, sulfoxyde, éther, aldéhyde, cétone, ester, carbonate, amine, nitrile, imide, oxime, urée et amide ou encore les composés incluant un cycle furanique ou encore un sucre.

Le composé organique contenant de l'oxygène peut être l'un ou plusieurs choisis parmi les composés comportant une ou plusieurs fonctions chimiques choisies parmi une fonction carboxylique, alcool, éther, aldéhyde, cétone, ester ou carbonate ou encore les composés incluant un cycle furanique ou encore les sucres. On entend ici par un composé organique contenant de l'oxygène un composé ne comportant pas d'autre hétéroatome. A titre d'exemple, le composé organique contenant de l'oxygène peut être l'un ou plusieurs choisis dans le groupe constitué par l'éthylèneglycol, le diéthylèneglycol, le triéthylèneglycol, un polyéthylèneglycol (avec un poids moléculaire compris entre 200 et 1500 g/mol), le propylèneglycol, le 2-butoxyéthanol, 2-(2-butoxyéthoxy)éthanol, 2-(2-méthoxyéthoxy)éthanol, le triéthylèneglycoldiméthyléther, le glycérol, l'acétophénone, la 2,4-pentanedione, la pentanone, l'acide acétique, l'acide maléique, l'acide malique, l'acide malonique, l'acide oxalique, l'acide gluconique, l'acide tartrique, l'acide citrique, l'acide γ-cétovalérique, un succinate de dialkyle C1-C4 et plus particulièrement le succinate de diméthyle, l'acétoacétate de méthyle, l'acétoacétate d'éthyle, le 3-oxobutanoate de 2-méthoxyéthyle, le 3-oxobutanoate de 2-méthacryloyloxyéthyle, le dibenzofurane, un éther couronne, l'acide orthophtalique, le glucose, le fructose, le saccharose, le sorbitol, le xylitol, la γ-valérolactone, la 2-acétylbutyrolactone, le carbonate de propylène, le 2-furaldéhyde (aussi connu sous le nom furfural), le 5-hydroxyméthylfurfural (aussi connu sous le nom 5-(hydroxyméthyl)-2-furaldéhyde ou 5-HMF), le 2-acétylfurane, le 5-méthyl-2-furaldéhyde, le 2-furoate de méthyle, l'alcool furfurylique (aussi connu sous le nom furfuranol), l'acétate de furfuryle, l'acide ascorbique, le lactate de butyle, le lactate d'éthyle, le butyryllactate de butyle, le 3-hydroxybutanoate d'éthyle, le 3-éthoxypropanoate d'éthyle, le 3-méthoxypropanoate de méthyle, l'acétate de 2-éthoxyéthyle, l'acétate de2-butoxyéthyle, l'acrylate de 2-hydroxyéthyle, le méthacrylate de 2-hydroxyéthyle, le 1,5-pentanediol, le 3-méthyl-1,5-pentanediol, le 1,5-hexanediol, le 3-éthyl-1,5-pentanediol, le 2,4-diéthyl-1,5-pentanediol, la 5-méthyl-2(3H)-furanone, le glycolate de butyle, le 4-oxo-pentanoate d'éthyle, le maléate de diéthyle, le maléate de diméthyle, le fumarate de diméthyle, le fumarate de diéthyle, l'adipate de diméthyle,le 3-oxoglutarate de diméthyle, le tartrate de diméthyle, le tartrate de diéthyle, le tartrate de diisopropyle, le tartrate de di-tert-butyle, le malate de diméthyle, le malate de diéthyle, le malate de diisopropyle et le malate de dibutyle.

Le composé organique contenant de l'azote peut être l'un ou plusieurs choisis parmi les composés comportant une ou plusieurs fonctions chimiques choisies parmi une fonction amine ou nitrile. On entend ici par un composé organique contenant de l'azote un composé ne comportant pas d'autre hétéroatome. A titre d'exemple, le composé organique contenant de l'azote peut être l'un ou plusieurs choisis dans le groupe constitué par l'éthylènediamine, la diéthylènetriamine, l'hexaméthylènediamine, la triéthylènetétramine, la tétraéthylènepentamine, la pentaéthylènehexamine, l'acétonitrile, l'octylamine, la guanidine ou un carbazole.

Le composé organique contenant de l'oxygène et de l'azote peut être l'un ou plusieurs choisis parmi les composés comportant une ou plusieurs fonctions chimiques choisies parmi une fonction acide carboxylique, alcool, éther, aldéhyde, cétone, ester, carbonate, amine, nitrile, imide, amide, urée ou oxime. On entend ici par un composé organique contenant de l'oxygène et de l'azote un composé ne comportant pas d'autre hétéroatome. A titre d'exemple, le composé organique contenant de l'oxygène et de l'azote peut être l'un ou plusieurs choisis dans le groupe constitué par l'acide 1,2-cyclohexanediaminetétraacétique, la monoéthanolamine (MEA), la 1-méthyl-2-pyrrolidinone, le diméthylformamide, l'acide éthylènediaminetétraacétique (EDTA), l'alanine, la glycine, l'acide nitrilotriacétique (NTA), l'acide N-(2-hydroxyéthyl)éthylènediamine-N,N',N'-triacétique (HEDTA), l'acide diéthylène-triaminepentaacétique (DTPA), la tétraméthylurée, l'acide glutamique, le diméthylglyoxime, la bicine, la tricine, le cyanoacétate de 2-méthoxyéthyle, la 1-éthyl-2-pyrrolidinone, la 1-vinyl-2-pyrrolidinone, la 1,3-diméthyl-2-imidazolidinone, la 1-(2-hydroxyéthyl)-2-pyrrolidinone, la 1-(2-hydroxyéthyl)-2,5-pyrrolidinedione, la 1-méthyl-2-pipéridinone, la 1-acétyl-2-azépanone, la 1-vinyl-2-azépanone et l'acide 4-aminobutanoïque.

Le composé organique contenant du soufre peut être l'un ou plusieurs choisis parmi les composés comportant une ou plusieurs fonctions chimiques choisies parmi une fonction thiol, thioéther, sulfone ou sulfoxyde. A titre d'exemple, le composé organique contenant du soufre peut être l'un ou plusieurs choisis dans le groupe constitué par l'acide thioglycolique, le 2,2'-thiodiéthanol, l'acide 2-hydroxy-4-méthylthiobutanoïque, un dérivé sulfoné d'un benzothiophène ou un dérivé sulfoxydé d'un benzothiophène, le 2-mercaptopropanoate d'éthyle, le 3-(méthylthio)propanoate de méthyle et le 3-(méthylthio)propanoate d'éthyle.

De préférence, le composé organique contient de l'oxygène, de manière préférée il est choisi parmi la γ-valérolactone, la 2-acétylbutyrolactone, le triéthylèneglycol, le diéthylèneglycol, l'éthylèneglycol, l'acide éthylènediaminetétra-acétique (EDTA), l'acide maléique, l'acide malonique, l'acide citrique, l'acide acétique, l'acide oxalique, l'acide gluconique, le glucose, le fructose, le saccharose, le sorbitol, le xylitol, l'acide γ-cétovalérique, un succinate de dialkyle C1-C4 et plus particulièrement le succinate de diméthyle, le diméthylformamide, la 1-méthyl-2-pyrrolidinone, le carbonate de propylène, le 3-oxobutanoate de 2-méthoxyéthyle, la bicine, la tricine, le 2-furaldéhyde (aussi connu sous le nom furfural), le 5-hydroxyméthylfurfural (aussi connu sous le nom 5-(hydroxyméthyl)-2-furaldéhyde ou 5-HMF), le 2-acétylfurane, le 5-méthyl-2-furaldéhyde, l'acide ascorbique, le lactate de butyle, le lactate d'éthyle, le butyryllactate de butyle, le 3-hydroxybutanoate d'éthyle, le 3-éthoxypropanoate d'éthyle, l'acétate de 2-éthoxyéthyle, l'acétate de 2-butoxyéthyle, l'acrylate de 2-hydroxyéthyle, la 1-vinyl-2-pyrrolidinone, la 1,3-diméthyl-2-imidazolidinone, le 1,5-pentanediol, la1-(2-hydroxyéthyl)-2-pyrrolidinone, la 1-(2-hydroxyéthyl)-2,5-pyrrolidinedione, la 5-méthyl-2(3H)-furanone, la 1-méthyl-2-pipéridinone, l'acide 4-aminobutanoïque, le glycolate de butyle, le 2-mercaptopropanoate d'éthyle, le 4-oxopentanoate d'éthyle, le maléate de diéthyle, le maléate de diméthyle, le fumarate de diméthyle, le fumarate de diéthyle, l'adipate de diméthyle et le 3-oxoglutarate de diméthyle.

Lorsqu'il(s) est/sont présent(s), la teneur totale en composé(s) organique(s) contenant de l'oxygène et/ou de l'azote et/ou du soufre présent(s) dans le catalyseur est généralement comprise entre 1 et 30 % poids, de préférence entre 1,5 et 25 % poids, et de manière plus préférée entre 2 et 20 % poids par rapport au poids total du catalyseur.

Lors de la préparation du catalyseur nécessitant une étape de séchage, la ou les étapes de séchage consécutive(s) à l'introduction du composé organique est (sont) réalisée(s) à une température inférieure à 200°C de manière à conserver de préférence au moins 30 %, de préférence au moins 50 %, et de manière très préférée au moins 70 % de la quantité du composé organique introduite calculée sur la base du carbone restant sur le catalyseur. Le carbone restant est mesuré par analyse élémentaire selon ASTM D5373.

### Deuxième catalyseur

Conformément à l'invention, le deuxième catalyseur comprend un support de silice-alumine et une phase active constituée de nickel et de tungstène. Le deuxième catalyseur selon l'invention comprend également du phosphore en tant que dopant et un composé organique. Il peut en outre comprendre du bore et/ou du fluor.

La fonction hydrogénante dudit deuxième catalyseur, aussi appelée phase active, est constituée de nickel et de tungstène.

Le deuxième catalyseur est caractérisé en ce que :
- la teneur en nickel, exprimée sous forme NiO, est comprise entre 1,3 et 4,3 % poids par rapport au poids total du catalyseur, de préférence entre 1,4 et 3,8 % poids, et de manière plus préférée entre 1,5 et 3,4 % poids,
- la teneur en tungstène, exprimée sous forme WO₃, est comprise entre 17 et 31 % poids par rapport au poids total du catalyseur, de préférence entre 18 et 30 % poids, de préférence entre 19 et 29 % poids, et de manière plus préférée entre 20 et 26 % poids,
- la teneur en phosphore, exprimée sous forme P₂O₃, est de préférence comprise entre 1,3 et 3,4 % poids par rapport au poids total du catalyseur, de préférence entre 1,4 et 3,1 % poids, et de manière très préférée entre 1,5 et 2,8% poids.

Le ratio molaire Ni/W est compris entre 0,18 et 0,45 mol/mol, de préférence compris entre 0,20 et 0,43 mol/mol et de manière encore plus préférée compris entre 0,22 et 0,42 mol/mol.

Le ratio molaire P/W est compris entre 0,18 et 0,45 mol/mol, de préférence compris entre 0,20 et 0,43 mol/mol et de manière encore plus préférée compris entre 0,22 et 0,42 mol/mol.

Le catalyseur à base d'une phase active constituée de nickel et de tungstène en présence de phosphore et d'un composé organique, déposés sur un support de silice-alumine, et présentant les ratios spécifiques entre les différents métaux et/ou le phosphore décrits ci-dessus, présente par effet synergique une excellente activité et stabilité en hydrotraitement, et notamment en hydrodéazotation (HDN) et en hydrogénation des aromatiques (HDA) mais également en hydrodésulfuration (HDS).

Sans vouloir être lié par une quelconque théorie, le support silice-alumine du deuxième catalyseur permettrait de modifier la structure des composés aromatiques les plus réfractaires (par réactions d'isomérisation et/ou craquage), rendant ces molécules plus réactives. Par conséquent, une optimisation de la teneur de chaque métal (en particulier du tungstène qui apporte un bénéfice en termes d'hydrogénation) et du phosphore en utilisant des ratios spécifiques, combiné au support silice-alumine, permet d'augmenter l'HDA prérequis pour augmenter l'HDN, induisant une amélioration globale des performances catalytiques.

Le deuxième catalyseur ayant les ratios spécifiques mentionnés ci-dessus est donc particulièrement préféré lors d'un enchaînement avec ledit premier catalyseur en amont.

Le deuxième catalyseur peut avantageusement contenir en outre au moins un dopant choisi parmi le bore, le fluor et un mélange de bore et de fluor. Lorsque ce dopant est présent, sa teneur est telle que décrite pour le premier catalyseur.

Le volume poreux du deuxième catalyseur est généralement compris entre 0,1 cm³/g et 1,5 cm³/g, de préférence compris entre 0,15 cm³/g et 1,1 cm³/g. Le volume poreux total est mesuré par porosimétrie au mercure selon la norme ASTM D4284 avec un angle de mouillage de 140°, telle que décrite dans l'ouvrage Rouquerol F. ; Rouquerol J. ; Singh K. « Adsorption by Powders & Porous Solids : Principle, methodology and applications », Academic Press, 1999, par exemple au moyen d'un appareil modèle Autopore III^{™} de la marque Micromeritics^{™}.

Le deuxième catalyseur se caractérise par une surface spécifique comprise entre 5 et 400 m²/g, de préférence comprise entre 10 et 350 m²/g, de préférence comprise entre 40 et 350 m²/g, de manière très préférée comprise entre 50 et 300 m²/g. La surface spécifique est déterminée dans la présente invention par la méthode B.E.T selon la norme ASTM D3663, méthode décrite dans le même ouvrage cité ci-dessus.

Le support du deuxième catalyseur est de préférence constitué d'une silice-alumine.

Le support de silice-alumine présente avantageusement un volume poreux total compris entre 0,1 et 1,5 cm³.g⁻¹, de préférence entre 0,2 et 0,8 cm³.g⁻¹ et de manière particulièrement préférée comprise entre 0,3 et 0,6 cm³.g⁻¹. Le volume poreux total est mesuré par porosimétrie au mercure selon la norme ASTM D4284 avec un angle de mouillage de 140°, telle que décrite dans l'ouvrage Rouquerol F. ; Rouquerol J. ; Singh K. « Adsorption by Powders & Porous Solids : Principle, methodology and applications », Academic Press, 1999, par exemple au moyen d'un appareil modèle Autopore III^{™} de la marque Micromeritics^{™}.

La surface spécifique du support de silice-alumine est avantageusement comprise entre 5 et 400 m².g⁻¹, de préférence entre 100 et 350 m².g⁻¹, de manière plus préférée entre 200 et 300 m².g^{-1.}. La surface spécifique est déterminée dans la présente invention par la méthode B.E.T selon la norme ASTM D3663, méthode décrite dans le même ouvrage cité ci-dessus.

La teneur en silice dans le support est d'au plus 50% poids par rapport au poids total du support, le plus souvent inférieure ou égale à 45% poids, de préférence inférieure ou égale à 40%. De préférence, la teneur en silice dans le support est comprise entre 10 et 50% pds, de préférence comprise entre 15 et 40 % pds et de manière particulièrement préférée comprise entre 20 et 35 % pds par rapport au poids total du support

Les sources de silicium sont bien connues de l'Homme du métier. On peut citer à titre d'exemple l'acide silicique, la silice sous forme de poudre ou sous forme colloïdale (sol de silice), le tétraéthylorthosilicate Si(OEt)₄.

Le support de silice-alumine peut aussi avantageusement contenir en outre une zéolithe. Dans ce cas, toutes les sources de zéolithes et toutes les méthodes de préparations associées connues de l'Homme du métier peuvent être incorporées. De préférence, la zéolithe est choisie parmi le groupe FAU, BEA, ISV, IWR, IWW, MEI, UWY et de manière préférée, la zéolithe est choisie parmi le groupe FAU et BEA, telle que la zéolithe Y et/ou bêta, et de manière particulièrement préférée telle que la zéolithe USY et/ou bêta. Lorsque la zéolithe est présente, sa teneur est comprise de 0,1 à 50% poids par rapport au poids total du support, de préférence comprise entre 0,1 et 10 % poids.

Le support se présente avantageusement sous forme de billes, d'extrudés, de pastilles ou d'agglomérats irréguliers et non sphériques dont la forme spécifique peut résulter d'une étape de concassage.

Le deuxième catalyseur selon l'invention comprend en outre un composé organique ou un groupe de composés organiques dont la nature et les quantités utilisées sont décrites dans la partie pour le premier catalyseur. Lorsque les deux catalyseurs comprennent un ou plusieurs composés organiques, ceux-ci peuvent être identiques ou différents.

De préférence, le composé organique du deuxième catalyseur contient de l'oxygène, de manière préférée il est choisi parmi la γ-valérolactone, la 2-acétylbutyrolactone, le triéthylèneglycol, le diéthylèneglycol, l'éthylèneglycol, l'acide éthylènediaminetétra-acétique (EDTA), l'acide maléique, l'acide malonique, l'acide citrique, l'acide acétique, l'acide oxalique, l'acide gluconique, le glucose, le fructose, le saccharose, le sorbitol, le xylitol, l'acide γ-cétovalérique, un succinate de dialkyle C1-C4 et plus particulièrement le succinate de diméthyle, le diméthylformamide, la 1-méthyl-2-pyrrolidinone, le carbonate de propylène, le 3-oxobutanoate de 2-méthoxyéthyle, la bicine, la tricine, le 2-furaldéhyde (aussi connu sous le nom furfural), le 5-hydroxyméthylfurfural (aussi connu sous le nom 5-(hydroxyméthyl)-2-furaldéhyde ou 5-HMF), le 2-acétylfurane, le 5-méthyl-2-furaldéhyde, l'acide ascorbique, le lactate de butyle, le lactate d'éthyle, le butyryllactate de butyle, le 3-hydroxybutanoate d'éthyle, le 3-éthoxypropanoate d'éthyle, l'acétate de 2-éthoxyéthyle, l'acétate de 2-butoxyéthyle, l'acrylate de 2-hydroxyéthyle, la 1-vinyl-2-pyrrolidinone, la 1,3-diméthyl-2-imidazolidinone, le 1,5-pentanediol, la1-(2-hydroxyéthyl)-2-pyrrolidinone, la 1-(2-hydroxyéthyl)-2,5-pyrrolidinedione, la 5-méthyl-2(3H)-furanone, la 1-méthyl-2-pipéridinone, l'acide 4-aminobutanoïque, le glycolate de butyle, le 2-mercaptopropanoate d'éthyle, le 4-oxopentanoate d'éthyle, le maléate de diéthyle, le maléate de diméthyle, le fumarate de diméthyle, le fumarate de diéthyle, l'adipate de diméthyle et le 3-oxoglutarate de diméthyle.

Selon un mode de réalisation préféré, le procédé d'hydrotraitement met en œuvre un enchainement d'une première section réactionnelle d'hydrotraitement contenant le premier catalyseur à base de nickel et de molybdène en présence de phosphore et d'un composé organique sur un support d'alumine et d'une deuxième section réactionnelle d'hydrotraitement contenant le deuxième catalyseur à base de nickel et de tungstène en présence de phosphore et d'un composé organique sur une support de silice-alumine, ledit deuxième catalyseur étant caractérisé par :
- la teneur en nickel, exprimée sous forme NiO, comprise entre 1,3 et 4,3 % poids par rapport au poids total du catalyseur, de préférence entre 1,4 et 3,8 % poids, et de manière plus préférée entre 1,5 et 3,4 % poids,
- la teneur en tungstène, exprimée sous forme WO₃, comprise entre 17 et 31 % poids par rapport au poids total du catalyseur, de préférence entre 18 et 30 % poids, de préférence entre 19 et 29 % poids, et de manière plus préférée entre 20 et 26 % poids,
   la teneur en phosphore, exprimée sous forme P₂O₅, de préférence comprise entre 1,3 et 3,4 % poids par rapport au poids total du catalyseur, de préférence entre 1,4 et 3,1 % poids, et de manière très préférée entre 1,5 et 2,8% poids.
- un ratio molaire Ni/W compris entre 0,18 et 0,45 mol/mol, de préférence compris entre 0,20 et 0,43 mol/mol et de manière encore plus préférée compris entre 0,22 et 0,42 mol/mol.
- un ratio molaire P/W compris entre 0,18 et 0,45 mol/mol, de préférence compris entre 0,20 et 0,43 mol/mol et de manière encore plus préférée compris entre 0,22 et 0,42 mol/mol.

Selon ce mode de réalisation préféré, ladite première section réactionnelle d'hydrotraitement contenant le premier catalyseur occupe un volume V1, et ladite deuxième section réactionnelle d'hydrotraitement contenant le deuxième catalyseur occupe un volume V2, la répartition des volumes V1/V2 étant comprise entre 50%vol/50%vol et 90%vol/10%vol, de préférence comprise entre 60 %vol/40%vol et 85%vol/15%vol et de manière particulièrement préférée comprise entre 70%vol/30%vol et 80%vol/20%vol, respectivement de ladite première et deuxième section réactionnelle d'hydrotraitement.

Selon ce mode, le composé organique est de préférence choisi parmi la γ-valérolactone, la 2-acétylbutyrolactone, le triéthylèneglycol, le diéthylèneglycol, l'éthylèneglycol, l'acide éthylènediaminetétra-acétique (EDTA), l'acide maléique, l'acide malonique, l'acide citrique, l'acide acétique, l'acide gluconique, le glucose, le fructose, le saccharose, le sorbitol, le xylitol, l'acide γ-cétovalérique, un succinate de dialkyle C1-C4 et plus particulièrement le succinate de diméthyle, le diméthylformamide, la 1-méthyl-2-pyrrolidinone, le carbonate de propylène, le 3-oxobutanoate de 2-méthoxyéthyle, la bicine, la tricine, le 2-furaldéhyde (aussi connu sous le nom furfural), le 5-hydroxyméthylfurfural (aussi connu sous le nom 5-(hydroxyméthyl)-2-furaldéhyde ou 5-HMF), le 2-acétylfurane, le 5-méthyl-2-furaldéhyde, l'acide ascorbique, le lactate de butyle, le lactate d'éthyle, le butyryllactate de butyle, le 3-hydroxybutanoate d'éthyle, le 3-éthoxypropanoate d'éthyle, l'acétate de 2-éthoxyéthyle, l'acétate de 2-butoxyéthyle, l'acrylate de 2-hydroxyéthyle, la 1-vinyl-2-pyrrolidinone, la 1,3-diméthyl-2-imidazolidinone, le 1,5-pentanediol, la1-(2-hydroxyéthyl)-2-pyrrolidinone, la 1-(2-hydroxyéthyl)-2,5-pyrrolidinedione, la 5-méthyl-2(3H)-furanone, la 1-méthyl-2-pipéridinone, l'acide 4-aminobutanoïque, le glycolate de butyle, le 2-mercaptopropanoate d'éthyle, le 4-oxopentanoate d'éthyle, le maléate de diéthyle, le maléate de diméthyle, le fumarate de diméthyle, le fumarate de diéthyle, l'adipate de diméthyle et le 3-oxoglutarate de diméthyle.

### Procédé de préparation

Le premier et le deuxième catalyseurs peuvent être préparés selon tout mode de préparation d'un catalyseur supporté connu de l'Homme de l'art.

Le premier et le deuxième catalyseurs peuvent être préparés selon un procédé de préparation comprenant les étapes suivantes :
i) on met en contact un précurseur de nickel, un précurseur de molybdène ou un précurseur de tungstène, le phosphore lorsqu'il est présent, et un composé organique lorsqu'il est présent avec un support à base d'alumine ou de silice-alumine, de manière à obtenir un précurseur de catalyseur,
ii) on sèche ledit précurseur de catalyseur issu de l'étape i) à une température inférieure à 200°C,
iii) optionnellement, on calcine le précurseur de catalyseur obtenu à l'étape ii) à une température comprise entre 200°C et 550°C,
iv) optionnellement, on sulfure le catalyseur obtenu à l'étape ii) ou à l'étape iii).

Lors de la mise en contact de l'étape i), le premier et le deuxième catalyseurs peuvent être préparés par imprégnation des métaux et du phosphore sur le support sélectionné. L'imprégnation peut par exemple être réalisée selon le mode connu de l'homme du métier sous la terminologie d'imprégnation à sec, dans lequel on introduit juste la quantité d'éléments désirés sous forme de sels solubles dans le solvant choisi, par exemple de l'eau déminéralisée, de façon à remplir aussi exactement que possible la porosité du support.

Les précurseurs de la phase active peuvent être introduits simultanément ou successivement. L'imprégnation de chaque précurseur peut être avantageusement réalisée en au moins deux fois. Les différents précurseurs peuvent ainsi être avantageusement imprégnés successivement avec un temps d'imprégnation et de maturation différentié. Un des précurseurs peut aussi être imprégné en plusieurs fois.

De préférence, les précurseurs de la phase active sont introduits simultanément.

Les précurseurs de nickel qui peuvent être utilisés sont avantageusement choisis parmi les oxydes, les hydroxydes, les hydroxycarbonates, les carbonates et les nitrates de nickel, par exemple, l'hydroxycarbonate de nickel, le carbonate ou l'hydroxyde de nickel sont utilisés de manière préférée.

Les précurseurs de molybdène qui peuvent être utilisés sont bien connus de l'Homme du métier. Par exemple, parmi les sources de molybdène, on peut utiliser les oxydes et hydroxydes, les acides molybdiques et leurs sels en particulier les sels d'ammonium tels que le molybdate d'ammonium, l'heptamolybdate d'ammonium, l'acide phosphomolybdique (H₃PMo₁₂O₄₀) et leurs sels, et éventuellement l'acide silicomolybdique (H₄SiMo₁₂O₄₀) et ses sels. Les sources de molybdène peuvent également être des hétéropolycomposés de type Keggin, Keggin lacunaire, Keggin substitué, Dawson, Anderson, Strandberg, par exemple. On utilise de préférence le trioxyde de molybdène et les hétéropolyanions de type Strandberg, Keggin, Keggin lacunaire ou Keggin substitué.

Les précurseurs de tungstène qui peuvent être utilisés sont également bien connus de l'Homme du métier. Par exemple, parmi les sources de tungstène, on peut utiliser les oxydes et hydroxydes, les acides tungstiques et leurs sels en particulier les sels d'ammonium tels que le tungstate d'ammonium, le métatungstate d'ammonium, l'acide phosphotungstique et leurs sels, et éventuellement l'acide silicotungstique (H₄SiW₁₂O₄₀) et ses sels. Les sources de tungstène peuvent également être des hétéropolycomposés de type Keggin, Keggin lacunaire, Keggin substitué, Dawson, par exemple. On utilise de préférence les oxydes et les sels d'ammonium tel que le métatungstate d'ammonium ou les hétéropolyanions de type Keggin, Keggin lacunaire ou Keggin substitué.

Le phosphore peut être introduit en totalité ou en partie par imprégnation. De préférence, il est introduit par une imprégnation, de préférence à sec, à l'aide d'une solution contenant les précurseurs de nickel, molybdène ou tungstène.

Ledit phosphore peut être avantageusement introduit seul ou en mélange avec la phase active, et ce au cours de n'importe laquelle des étapes d'imprégnation de la fonction hydrogénante si celle-ci est introduite en plusieurs fois. Ledit phosphore peut aussi être introduit, tout ou partie, lors de l'imprégnation d'un composé organique contenant de l'oxygène et/ou de l'azote et/ou du soufre si celui-ci est introduit séparément de la fonction hydrogénante (cas de la post- et pré-imprégnation décrites ultérieurement). Il peut également être introduit dès la synthèse du support, à n'importe quelle étape de la synthèse de celui-ci. Il peut ainsi être introduit avant, pendant ou après le malaxage de la matrice gel d'alumine choisie, telle que par exemple et de préférence l'oxyhydroxyde d'aluminium (boehmite) précurseur de l'alumine.

Le précurseur de phosphore préféré est l'acide orthophosphorique H₃PO₄, mais ses sels et esters comme les phosphates d'ammonium conviennent également. Le phosphore peut également être introduit en même temps que le(s) élément(s) du groupe VIB sous la forme d'hétéropolyanions de Keggin, Keggin lacunaire, Keggin substitué ou de type Strandberg.

Toute solution d'imprégnation décrite dans la présente invention peut comprendre tout solvant polaire connu de l'Homme du métier. Ledit solvant polaire utilisé est avantageusement choisi dans le groupe formé par le méthanol, l'éthanol, l'eau, le phénol, le cyclohexanol, pris seuls ou en mélange. De manière préférée, on utilise un solvant protique polaire. Une liste des solvants polaires usuels ainsi que leur constante diélectrique peut être trouvée dans le livre « Solvents and Solvent Effects in Organic Chemistry », C. Reichardt, Wiley-VCH, 3eme édition, 2003, pages 472-474. De manière très préférée, le solvant utilisé est l'eau ou l'éthanol, et de manière particulièrement préférée, le solvant est l'eau. Dans un mode de réalisation possible, le solvant peut être absent dans la solution d'imprégnation.

Lorsque le premier ou le deuxième catalyseur comprend en outre un dopant choisi parmi le bore, le fluor ou un mélange de bore et de fluor, l'introduction de ce(s) dopant(s) peut se faire de la même manière que l'introduction du phosphore décrite ci-dessus à diverses étapes de la préparation et de diverses manières.

Les précurseurs de bore peuvent être l'acide borique, l'acide orthoborique H₃BO₃, le biborate ou le pentaborate d'ammonium, l'oxyde de bore, les esters boriques. Le bore peut être introduit par exemple par une solution d'acide borique dans un mélange eau/alcool ou encore dans un mélange eau/éthanolamine. De préférence le précurseur de bore, si du bore est introduit, est l'acide orthoborique.

Les précurseurs de fluor qui peuvent être utilisés sont bien connus de l'Homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide fluorhydrique. Le fluor peut être introduit par exemple par imprégnation d'une solution aqueuse d'acide fluorhydrique, ou de fluorure d'ammonium ou encore de bifluorure d'ammonium.

Le composé organique contenant de l'oxygène et/ou de l'azote et/ou du soufre du deuxième catalyseur, ou du premier catalyseur lorsqu'il est présent, est introduit avant l'étape de séchage ii). Le composé organique est en règle générale introduit par imprégnation, en présence ou non de la phase active et du phosphore et en présence ou non d'un solvant.

L'introduction du composé organique comporte plusieurs modes de mise en œuvre qui se distinguent notamment par le moment de l'introduction du composé organique par rapport à l'introduction des métaux. Elle peut être effectuée soit en même temps que l'imprégnation des métaux (co-imprégnation), soit après l'imprégnation des métaux (post-imprégnation), ou enfin avant l'imprégnation des métaux (pré-imprégnation) notamment lors de la préparation du support, et de manière préférentielle lors de la mise en forme ou par imprégnation sur un support déjà formé. Chaque mode, pris seul ou en combinaison, peut se dérouler en une ou plusieurs étapes.

De plus, l'étape de mise en contact peut combiner au moins deux modes de mise en œuvre, par exemple la co-imprégnation et la post-imprégnation. Selon un mode de réalisation alternatif, la mise en contact selon l'étape i) combine au moins deux modes de mise en contact, par exemple la co-imprégnation de la phase active et du phosphore avec un composé organique, suivi d'un séchage à une température inférieure à 200°C, puis d'une post-imprégnation d'un composé organique qui peut être identique ou différent de celui utilisé pour la co-imprégnation. Chaque mode, pris seul ou en combinaison, peut se dérouler en une ou plusieurs étapes.

Le composé organique du deuxième catalyseur et du premier catalyseur lorsqu'il est présent est de préférence introduit en post-imprégnation. Dans ce cas, on introduit d'abord les métaux et le phosphore, on sèche à une température inférieure à 200°C, on introduit le composé organique, puis on sèche à une température inférieure à 200°C sans calcination ultérieure.

Le(s) composé(s) organique(s) est(sont) avantageusement introduits dans une solution d'imprégnation qui, selon le mode de préparation, peut être la même solution ou une solution différente de celle contenant les précurseurs de la phase active et le phosphore, dans une quantité correspondante :
- à un rapport molaire du composé organique par la somme du ou des éléments du groupe VIB des précurseurs de catalyseur (Mo pour le premier catalyseur ou W pour le deuxième catalyseur) compris entre 0,01 et 5 mol/mol, de préférence compris entre 0,05 et 3 mol/mol, de manière préférée compris entre 0,05 et 1,5 mol/mol et de manière très préférée, compris entre 0,1 et 1,2 mol/mol, calculé sur la base des composants introduits dans la ou les solution(s) d'imprégnation, et
- à un rapport molaire du composé organique par nickel compris entre 0,02 et 17 mol/mol, de préférence compris entre 0,1 et 10 mol/mol, de manière préférée compris entre 0,15 et 8 mol/mol et de manière très préférée, compris entre 0,6 et 5 mol/mol, calculé sur la base des composants introduits dans la ou les solution(s) d'imprégnation.

Lorsque plusieurs composés organiques sont présents, les différents rapports molaires s'appliquent pour chacun des composés organiques présents.

Avantageusement, après chaque étape d'imprégnation, on laisse maturer le support imprégné. La maturation permet à la solution d'imprégnation de se disperser de manière homogène au sein du support.

Toute étape de maturation décrite dans la présente invention est avantageusement réalisée à pression atmosphérique, dans une atmosphère saturée en eau et à une température comprise entre 17°C et 50°C, et de préférence à température ambiante. Généralement une durée de maturation comprise entre dix minutes et quarante-huit heures et de préférence comprise entre trente minutes et cinq heures, est suffisante. Des durées plus longues ne sont pas exclues, mais n'apportent pas nécessairement d'amélioration.

Conformément à l'étape ii) du procédé de préparation selon l'invention, le précurseur de catalyseur obtenu à l'étape i) éventuellement maturé est soumis à une étape de séchage à une température inférieure à 200°C, de préférence comprise entre 50 et 180°C, de manière préférée entre 70 et 150°C et de manière très préférée entre 75 et 130°C.

L'étape de séchage est avantageusement effectuée par toute technique connue de l'Homme du métier. Elle est avantageusement effectuée à pression atmosphérique ou à pression réduite, et de préférence à pression atmosphérique. Elle est avantageusement effectuée en lit traversé en utilisant de l'air ou tout autre gaz chaud. De manière préférée, lorsque le séchage est effectué en lit fixe, le gaz utilisé est soit l'air, soit un gaz inerte comme l'argon ou l'azote. De manière très préférée le séchage est réalisé en lit traversé en présence d'azote et/ou d'air. De préférence, l'étape de séchage a une durée courte comprise entre 5 minutes et 4 heures, de préférence entre 30 minutes et 4 heures et de manière très préférée entre 1 heure et 3 heures. Lorsqu'un composé organique est présent, le séchage est alors conduit de manière à préférentiellement conserver au moins 30 % du composé organique introduit, de préférence cette quantité est supérieure à 50% et de manière encore plus préférée, supérieure à 70%, calculée sur la base du carbone restant sur le catalyseur. A l'issue de l'étape de séchage b), on obtient un catalyseur séché.

Optionnellement, l'étape de séchage ii) peut être suivie d'une étape de calcination iii).

Selon cette variante, à l'issue de l'étape ii) de séchage, on effectue une étape de calcination c) à une température comprise entre 200°C et 600°C, de préférence comprise entre 250°C et 550°C, sous une atmosphère inerte (azote par exemple) ou sous une atmosphère contenant de l'oxygène (air par exemple). La durée de ce traitement thermique est généralement comprise entre 0,5 heures et 16 heures, de préférence entre 1 heure et 5 heures. Après ce traitement, la phase active se trouve ainsi sous forme oxyde, les hétéropolyanions sont ainsi transformés en oxydes. De même, le catalyseur ne contient plus ou très peu de composé organique lorsqu'il a été introduit. Cependant l'introduction du composé organique lors de sa préparation a permis d'augmenter la dispersion de la phase active menant ainsi à un catalyseur plus actif.

Lorsqu'un composé organique est présent, le catalyseur n'est de préférence pas soumis à une calcination. On entend ici par calcination un traitement thermique sous un gaz contenant de l'air ou de l'oxygène à une température supérieure ou égale à 200°C.

Cependant, le précurseur de catalyseur peut subir une étape de calcination avant l'introduction du composé organique, notamment après l'imprégnation de la phase active, et du phosphore.

Le premier ou le deuxième catalyseur peut être un catalyseur frais, c'est-à-dire un catalyseur qui n'a pas été utilisé comme catalyseur auparavant dans une unité catalytique et notamment en hydrotraitement.

Le premier ou le deuxième catalyseur selon l'invention peut aussi être un catalyseur régénéré et/ou réjuvéné. On entend par un catalyseur régénéré et/ou réjuvéné un catalyseur qui a été utilisé en tant que catalyseur dans une unité catalytique et notamment en hydrotraitement et/ou hydrocraquage et qui a été soumis à au moins une étape d'élimination partielle ou totale du coke par exemple par calcination (régénération). La régénération peut être réalisée par tous les moyens connus de l'Homme du métier. La régénération est en général réalisée par calcination à des températures comprises entre 350 et 550°C, et le plus souvent entre 400 et 520°C, ou entre 420 et 520°C, ou encore entre 450 et 520°C, des températures inférieures à 500°C étant souvent avantageuses.

Lorsque le catalyseur régénéré ne comprend plus assez de phase active, de phosphore ou qu'il présente un ratio ou des ratios en dehors des ratios préférés décrits ci-dessus, le catalyseur régénéré peut être réjuvéné en introduisant un ou plusieurs précurseurs de la phase active et/ou le phosphore dans le catalyseur régénéré. Il est également possible d'introduire au moins un composé organique simultanément avec les métaux et le phosphore ou séparément. Le composé organique introduit peut être identique ou pas au composé organique du catalyseur frais lorsque ce catalyseur comportait un tel composé organique. Les conditions opératoires décrites ci-avant concernant la maturation, le séchage et la calcination optionnelle et la sulfuration optionnelle sont bien entendu applicables dans le cadre de ce dernier mode de réalisation.

Avant son utilisation pour la réaction d'hydrotraitement, il est avantageux de transformer le premier et/ou le deuxième catalyseurs en un catalyseur sulfuré afin de former son espèce active. Cette étape d'activation ou de sulfuration s'effectue par les méthodes bien connues de l'Homme de l'art, et avantageusement sous une atmosphère sulfo-réductrice en présence d'hydrogène et d'hydrogène sulfuré.

Selon une variante, le premier ou le deuxième catalyseur est avantageusement soumis à une étape de sulfuration après l'étape ii) de séchage ou l'étape iii) de calcination optionnelle.

Ledit catalyseur est avantageusement sulfuré de manière *ex situ* ou *in situ.* Les agents sulfurants sont le gaz H₂S, le soufre élémentaire, le CS₂, les mercaptans, les sulfures et/ou polysulfures, les coupes hydrocarbonées à point d'ébullition inférieur à 400°C contenant des composés soufrés ou tout autre composé contenant du soufre utilisé pour l'activation des charges hydrocarbures en vue de sulfurer le catalyseur. Lesdits composés contenant du soufre sont avantageusement choisis parmi les disulfures d'alkyle tel que par exemple le disulfure de diméthyle (DMDS), les sulfures d'alkyle, tel que par exemple le sulfure de diméthyle, les thiols tel que par exemple le n-butylmercaptan (ou 1-butanethiol) et les composés polysulfures de type tertiononylpolysulfure. Le catalyseur peut également être sulfuré par le soufre contenu dans la charge à désulfurer. De manière préférée, le catalyseur est sulfuré *in situ* en présence d'un agent sulfurant et d'une charge hydrocarbonée. De manière très préférée le catalyseur est sulfuré *in situ* en présence d'une charge hydrocarbonée additivée de disulfure de diméthyle.

### Application du procédé selon l'invention dans un procédé d'hydrocraquage

Selon une première variante, le procédé d'hydrotraitement selon l'invention est avantageusement mis en oeuvre comme prétraitement dans un procédé d'hydrocraquage, et plus particulièrement dans un procédé d'hydrocraquage dit en «une étape» ou dans un procédé d'hydrocraquage dit en «deux étapes». Le procédé d'hydrocraquage permet de convertir des fractions pétrolières, en particulier les distillats sous vide (DSV) en produits plus légers et plus valorisables (essence, distillats moyens). Le procédé d'hydrotraitement selon l'invention vise à éliminer les composés soufrés, azotés ou aromatiques présents dans ladite coupe distillat sous vide.

Un procédé d'hydrocraquage dit en "une étape", comporte en premier lieu et de façon générale un hydrotraitement poussé qui a pour but de réaliser une HDN, HDS et HDA poussées de la charge avant que celle-ci ne soit envoyée sur le ou les catalyseurs d'hydrocraquage. Ledit procédé d'hydrocraquage en une étape est particulièrement avantageux lorsque le(s)dit(s) catalyseur(s) d'hydrocraquage comprenne(nt) un support comportant des cristaux de zéolithe. Cet hydrotraitement poussé de la charge n'entraîne qu'une conversion limitée de la charge, en fractions plus légères, qui reste insuffisante et doit donc être complétée sur le(s) catalyseur(s) d'hydrocraquage plus actif(s). Cependant, il est à noter qu'aucune séparation des effluents n'intervient entre les différents lits catalytiques : la totalité de l'effluent en sortie du lit catalytique d'hydrotraitement est injectée sur le ou les lit(s) catalytique(s) contenant le(s)dit(s) catalyseur(s) d'hydrocraquage puis une séparation des produits formés est réalisée. Cette version de l'hydrocraquage possède une variante qui présente un recyclage de la fraction non convertie vers au moins l'un des lits catalytiques d'hydrocraquage en vue d'une conversion plus poussée de la charge. Avantageusement, le procédé d'hydrotraitement selon l'invention comprenant l'enchaînement spécifique selon l'invention, est mis en œuvre en amont d'un catalyseur d'hydrocraquage dans un procédé d'hydrocraquage en une étape. Il permet en outre de limiter la teneur en azote à l'issue de l'étape de prétraitement afin de protéger le catalyseur d'hydrocraquage à base de zéolithe qui est très sensible à l'azote.

Un procédé d'hydrocraquage dit en "deux étapes" comporte une première étape qui a pour objectif, comme dans le procédé "une étape", de réaliser l'hydrotraitement de la charge, mais aussi d'atteindre une conversion de cette dernière de l'ordre en général de 40 à 60%. L'effluent issu de la première étape subit ensuite une séparation, généralement par distillation, appelée le plus souvent séparation intermédiaire, qui a pour objectif de séparer les produits de conversion de la fraction non convertie. Dans la deuxième étape du procédé d'hydrocraquage en deux étapes selon l'invention, seule la fraction de la charge non convertie lors de la première étape est traitée. Cette séparation permet au procédé d'hydrocraquage en deux étapes selon l'invention d'être plus sélectif en distillat moyen (kérosène + diesel) que le procédé en une étape selon l'invention. En effet, la séparation intermédiaire des produits de conversion évite leur "sur-craquage" en naphta et gaz dans la deuxième étape sur le(s) catalyseur(s) d'hydrocraquage. Par ailleurs, il est à noter que la fraction non convertie de la charge traitée dans la deuxième étape contient en général de très faibles teneurs en NH₃ ainsi qu'en composés azotés organiques, en général moins de 20 ppm poids voire moins de 10 ppm poids.

Ladite première étape est mise en oeuvre en présence de l'enchaînement spécifique de catalyseurs selon l'invention, et d'un catalyseur d'hydrocraquage afin d'effectuer un hydrotraitement et une conversion de l'ordre en général de 40 à 60%. Les lits catalytiques de l'enchaînement spécifique de catalyseurs selon l'invention se trouvent avantageusement en amont du catalyseur d'hydrocraquage. Ladite deuxième étape est généralement mise en oeuvre en présence d'un catalyseur d'hydrocraquage de composition différente de celui présent pour la mise en oeuvre de ladite première étape.

Les procédés d'hydrocraquage sont généralement effectués à une température comprise entre 250 et 480°C, avantageusement comprise entre 320 et 450°C, de préférence entre 330 et 435°C, sous une pression comprise entre 2 et 25 MPa, de manière préférée entre 3 et 20 MPa, la vitesse volumique horaire de la charge par rapport au volume de chaque catalyseur (VVH) est avantageusement comprise entre 0,1 et 40 h⁻¹, de préférence entre 0,2 et 12 h⁻¹, de manière très préférée entre 0,4 et 6 h⁻¹ et le rapport hydrogène/charge exprimé en normaux mètres cube (Nm³) d'hydrogène par mètre cube (m³) de charge hydrocarbonée est avantageusement compris entre 80 NL/L et 5000 NL/L, de préférence entre 100 et 2000 NL/L. Les procédés d'hydrocraquage de distillats sous vide couvrent les domaines de pression et de conversion allant de l'hydrocraquage doux à l'hydrocraquage haute pression. On entend par hydrocraquage doux, un hydrocraquage conduisant à des conversions modérées, généralement inférieures à 40%, et fonctionnant à basse pression, généralement entre 2 MPa et 6 MPa.

Les catalyseurs d'hydrocraquage sont du type bifonctionnel : ils associent une fonction acide à une fonction hydro-déshydrogénante. La fonction acide est apportée par des supports poreux dont les surfaces varient généralement de 150 à 800 m².g⁻¹ et présentant une acidité superficielle, telles que les alumines halogénées (chlorées ou fluorées notamment), les combinaisons d'oxydes de bore et d'aluminium, les aluminosilicates mésoporeux amorphes ou cristallisés et les zéolithes dispersées dans un liant oxyde. La fonction hydro-déshydrogénante est apportée par la présence d'une phase active à base d'au moins un métal du groupe VIB et éventuellement au moins un métal du groupe VIII du tableau périodique des éléments. Les formulations les plus courantes sont de type nickel-molybdène (NiMo) et nickel-tungstène (NiW) et plus rarement de type cobalt-molybdène (CoMo). Après préparation, la fonction hydro-déshydrogénante se présente souvent sous forme d'oxyde. Les méthodes usuelles conduisant à la formation de la phase hydro-déshydrogénante des catalyseurs d'hydrocraquage consistent en un dépôt de précurseur(s) moléculaire(s) d'au moins un métal du groupe VIB et éventuellement au moins un métal du groupe VIII sur un support oxyde acide par la technique dite "d'imprégnation à sec" suivi des étapes de maturation, séchage et calcination conduisant à la formation de la forme oxydée du(des)dit(s) métal(aux) employé(s). La forme active et stable pour les procédés d'hydrocraquage étant la forme sulfurée, ces catalyseurs doivent subir une étape de sulfuration. Celle-ci peut être réalisée dans l'unité du procédé associé (on parle alors de sulfuration in-situ) ou préalablement au chargement du catalyseur dans l'unité (on parle alors de sulfuration ex-situ).

### Application du procédé selon l'invention dans un procédé de FCC

Selon une deuxième variante, le procédé d'hydrotraitement selon l'invention est avantageusement mis en oeuvre comme prétraitement dans un procédé de craquage catalytique à lit fluidisé (ou procédé FCC pour Fluid Catalytic Cracking selon la terminologie anglo-saxonne). Le procédé FCC peut être exécuté de manière classique connue des hommes du métier dans les conditions adéquates de craquage en vue de produire des produits hydrocarbonés de plus faible poids moléculaire. On trouvera par exemple une description sommaire du craquage catalytique (dont la première mise en oeuvre industrielle remonte à 1936 (procédé HOUDRY) ou en 1942 pour l'utilisation de catalyseur en lit fluidisé) dans ULLMANS ENCYCLOPEDIA OF INDUSTRIAL CHEMISTRY VOLUME A 18, 1991, pages 61 à 64.

On utilise habituellement un catalyseur classique comprenant une matrice, éventuellement un additif et au moins une zéolithe dans le procédé FCC. La quantité de zéolithe est variable mais habituellement de 3 à 60 % en poids, souvent de 6 à 50 % en poids et le plus souvent de 10 à 45 % en poids par rapport au poids du catalyseur. La zéolithe est habituellement dispersée dans la matrice. La quantité d'additif est habituellement de 0 à 30 % en poids et souvent de 0 à 20 % en poids par rapport au poids du catalyseur. La quantité de matrice représente le complément à 100 % en poids. L'additif est généralement choisi dans le groupe forme par les oxydes des métaux du groupe IIA de la classification périodique des éléments tels que par exemple l'oxyde de magnésium ou l'oxyde de calcium, les oxydes des terres rares et les titanates des métaux du groupe IIA. La matrice est le plus souvent une silice, une alumine, une silice-alumine, une silice-magnésie, une argile ou un mélange de deux ou plusieurs de ces produits. La zéolithe la plus couramment utilisée est la zéolithe Y.

On effectue le craquage dans un réacteur sensiblement vertical soit en mode ascendant (riser) soit en mode descendant (dropper). Le choix du catalyseur et des conditions opératoires sont fonctions des produits recherchés en fonction de la charge traitée comme cela est par exemple décrit dans l'article de M. MARCILLY pages 990-991 publie dans la revue de l'institut français du pétrole nov.-dec. 1975 pages 969-1006. On opère habituellement à une température de 450 à 600°C et des temps de séjour dans le réacteur inférieurs à 1 minute souvent de 0,1 à 50 secondes.

Le prétraitement permet en outre de limiter la teneur en azote à l'issue de l'étape de prétraitement afin de protéger le catalyseur de craquage catalytique à base de zéolithe qui est très sensible à l'azote.

### EXEMPLES

Les exemples qui suivent démontrent le gain d'activité important en HDA et HDN en utilisant l'enchaînement spécifique selon l'invention.

Les exemples 1 à 3 décrivent la préparation de catalyseurs C1 à C3. La composition finale de chaque catalyseur en métaux et en phosphore, exprimée sous forme d'oxydes et rapportée au poids du catalyseur, ainsi que les ratios Ni/W et P/W figurent dans le tableau1 ci-dessous.

Les exemples 4 à 8 décrivent l'évaluation en en hydrodéazotation (HDN) et en hydrogénation des aromatiques (HDA) de distillat sous vide des différents catalyseurs et/ou enchaînements de catalyseurs C1, C2 et C3.

### Exemple 1 : Préparation du catalyseur NiMoP sur alumine C1

Sur 100 grammes d'un support d'alumine A1 présentant une perte au feu de 4,1 %poids, une surface BET de 263 m²/g, un volume poreux mesuré par porosimétrie au mercure de 0,66 ml/g et un diamètre moyen des pores de 9,7 nm défini comme le diamètre médian en volume par porosimétrie au mercure et qui se présente sous la forme « extrudé », on ajoute du nickel, du molybdène, et du phosphore. Le support A1 présente un volume de reprise en eau de 0,72 mL/g. La solution d'imprégnation est préparée par dissolution à 90°C de 32,9 grammes d'oxyde de molybdène (Merck^{™}, pureté > 99,5% poids), de 10,5 grammes, d'hydroxycarbonate de nickel (Merck^{™}, pureté 99,9% poids) et 12,78 grammes d'une solution d'acide orthophosphorique (Merck^{™}, 85 % poids dans l'eau) dans 53,7 mL d'eau distillée. Après imprégnation à sec, les extrudés sont laissés à maturer en atmosphère saturée en eau pendant 24 h à température ambiante, puis ils sont séchés à 90°C pendant 16 h. Le support imprégné séché du catalyseur C1 est ensuite additivé par imprégnation à sec d'une solution contenant un mélange de succinate de diméthyle (DMSU) et d'acide acétique (à 75 % de pureté). Les rapports molaires sont les suivants : DMSU/Mo = 0,85 mol/mol, DMSU/acide acétique = 0,5 mol/mol. Le catalyseur subit encore une étape de maturation de 3 h à 20°C sous air puis un séchage dans un four de type lit traversé à 120°C pendant 3 h. Le catalyseur séché ainsi obtenu est noté C1. La composition finale du catalyseur C1 exprimée sous forme d'oxydes est alors la suivante : MoO₃ = 22 +/- 0,2 (% en poids), NiO = 4,5 +/- 0,1 (% en poids) et P₂O₅ = 5,3 +- 0, 1 (% en poids).

### Exemple 2 : Préparation du catalyseur NiWP sur silice-alumine C2

Sur 100 grammes d'un support de silice-alumine amorphe ASA1 présentant une perte au feu de 1,5 %poids, une surface BET de 240 m²/g, un volume poreux mesuré par porosimétrie au mercure de 0,46 ml/g et un diamètre moyen des pores de 7,42 nm défini comme le diamètre médian en volume par porosimétrie au mercure et qui se présente sous la forme « extrudé », on ajoute du nickel, du tungstène et du phosphore. Le support ASA1 présente un volume de reprise en eau de 0,56 mL/g. La solution d'imprégnation est préparée par dissolution à 80°C de 43,93 g d'acide phosphotungstique hydraté (Merck^{™}, pureté >99,5% poids), 2,97 g d'acide phosphorique (Merck^{™}, 85 % poids dans l'eau), 7,26g d'hydroxycarbonate de nickel (Merck^{™}, pureté 99,9% poids) dans 48,1 mL d'eau distillée. Après imprégnation à sec, les extrudés sont laissés à maturer en atmosphère saturée en eau pendant 24 h à température ambiante, puis ils sont séchés à 120°C pendant 5 heures.

Le support imprégné séché du catalyseur C2 est ensuite additivé par imprégnation à sec d'une solution contenant une solution aqueuse d'acide γ-cétovalérique. Le rapport molaire est le suivant : acide γ-cétovalérique /W = 0,8 mol/mol. Le catalyseur subit encore une étape de maturation de 3 h à 20°C sous air puis un séchage dans un four de type lit traversé à 120°C pendant 3 h. Le catalyseur séché ainsi obtenu est noté C2.

La composition finale du catalyseur C2 exprimée sous forme d'oxydes est alors la suivante : WO₃ = 25 +/- 0,2 (% en poids), NiO = 3,22 +/- 0,1 (% en poids) et P₂O₅ = 1,91 +- 0,1 (% en poids).

### Exemple 3 : Préparation du catalyseur NiWP sur alumine C3

Sur le même support A1 que présenté à l'exemple 1, on ajoute du nickel, du tungstène et du phosphore. La solution d'imprégnation est préparée par dissolution à 80°C de 48,18 g d'acide phosphotungstique hydraté (Merck^{™}, pureté >99,5% poids), 3,32 g d'acide phosphorique (Merck^{™}, 85 % poids dans l'eau), 8,12 g d'hydroxycarbonate de nickel (Merck^{™}, pureté 99,9% poids) dans 69,4 mL d'eau distillée. Après imprégnation à sec de 100g du support A1, les extrudés sont laissés à maturer en atmosphère saturée en eau pendant 24 h à température ambiante, puis ils sont séchés à 120°C pendant 5 heures.

Le support imprégné séché du catalyseur C3 est ensuite additivé par imprégnation à sec d'une solution contenant une solution aqueuse d'acide γ-cétovalérique. Le rapport molaire est le suivant : acide γ-cétovalérique /W = 0,8 mol/mol. Le catalyseur subit encore une étape de maturation de 3 h à 20°C sous air puis un séchage dans un four de type lit traversé à 120°C pendant 3 h. Le catalyseur séché ainsi obtenu est noté C3.

La composition finale du catalyseur C3 exprimée sous forme d'oxydes est alors la suivante : WO₃ = 27 +/- 0,2 (% en poids), NiO = 3,48 +/- 0,1 (% en poids) et P₂O₅ = 2,07 +- 0,1 (% en poids).

**Tableau 1 : Composition des catalyseurs C1, C2 et C3.**

| Catalyseur | % poids NiO | % poids MoO₃ | % poids WO₃ | % poids P₂O₅ | Ni/ W (mol/mol) | P/ W (mol/mol) |
|---|---|---|---|---|---|---|
| C1 | 4,5 | 22 | - | 5,3 | 0,38 | 0,46 |
| C2 | 3,22 | | 25 | 1,91 | 0,4 | 0,25 |
| C3 | 3,48 | | 27 | 2,07 | 0,4 | 0,25 |

### Exemples 4 à 7 : Evaluation en hydrodéazotation (HDN) et hydrogénation des aromatiques (HDA) de distillats sous vide des catalyseurs ou enchaînements de catalyseurs C1, C2 et C3

Les catalyseurs et/ou enchaînements de catalyseurs pris parmi les catalyseurs C1, C2, C3 ont été testés en hydrodéazotation (HDN) et hydrogénation des aromatiques (HDA) de distillats sous vide.

La charge est un distillat sous vide (light vacuum gas oil selon la terminologie anglosaxonne) issue de l'hydroconversion profonde de résidus sous vide selon le procédé H-Oil^{™}. Les caractéristiques de la charge de test utilisée sont les suivantes : densité à 15 °C= 0,92 g/cm³ (NF EN ISO 12185), indice de réfraction à 20°C = 1,5122 (ASTM D1218-12), teneur en soufre = 0,59% en poids, teneur en azote = 2720 ppm pds.

### · Distillation Simulée (ASTM D2887) :

- PI : 240.7 °C ;
- 10 % : 331.5 °C ;
- 50 % : 424.9 °C ;
- 90 % : 539.4 °C ;
- PF : 600.9 °C.

Le test est mené dans un réacteur pilote isotherme à lit fixe traversé, les fluides circulant de bas en haut. Le réacteur comprend deux zones catalytiques permettant d'évaluer différents enchaînements des catalyseurs C1, C2 et C3. La charge traverse d'abord la première zone chargée avec le premier catalyseur, puis la deuxième zone chargée avec le deuxième catalyseur.

Selon l'exemple 4 (conforme à l'invention), la première zone est chargée avec le catalyseur C1 (70 % du volume), puis la deuxième avec le catalyseur C2 (30 % du volume).

Selon l'exemple 5 (conforme à l'invention), la première zone est chargée avec le catalyseur C1 (50 % du volume), puis la deuxième avec le catalyseur C2 (50 % du volume).

Selon l'exemple 6 (non-conforme à l'invention), les deux zones sont chargées avec le catalyseur C1 (100 % du volume)

Selon l'exemple 7 (non-conforme à l'invention), les deux zones sont chargées avec le catalyseur C2 (100 % du volume).

Selon l'exemple 8 (non-conforme à l'invention), la première zone est chargée avec le catalyseur C1 (70 % du volume), puis la deuxième avec le catalyseur C3 (30 % du volume).

Les catalyseurs sont préalablement sulfurés in situ à 350°C dans le réacteur sous pression au moyen d'une charge gazole de distillation atmosphérique (straight run selon la terminologie anglo-saxonne) (densité à 15 °C= 0,8491 g/cm³ (NF EN ISO 12185) et teneur initiale en soufre = 0,42 % pds), à laquelle est additionnée 2% en poids de diméthyldisulfure.

Les tests catalytiques ont été conduits dans les conditions opératoires suivantes : une pression totale de 14 MPa, un volume total des deux zones catalytiques de 9 cm³, une température comprise entre 390°C et 415°C, avec un débit d'hydrogène de 15,8 L/h et avec un débit de charge de 14,4 cm³/h.

Les caractéristiques des effluents sont analysées : densité à 15 °C (NF EN ISO 12185), indice de réfraction à 20°C (ASTM D1218-12), distillation simulée (ASTM D2887), teneur en soufre et teneur en azote. Les teneurs en carbone aromatique résiduelles sont calculées par la méthode n-d-M (ASTM D3238). Le taux d'hydrogénation des aromatiques est calculé comme le ratio de la teneur en carbone aromatique dans la charge auquel on soustrait celle des effluents, sur celui de la charge de test. Le taux d'hydrodéazotation est calculé comme le ratio de la teneur en azote des effluents auquel on soustrait celle des effluents, sur celui de la charge de test.

Les performances catalytiques des enchaînements de catalyseurs testés sont données dans le Tableau 2. Elles sont exprimées en activité volumique relative (RVA) par rapport à 100% vol catalyseur C1 choisi comme référence (exemple 6), en supposant un ordre de 1,2 pour la réaction HDA et un ordre de 1 pour la réaction d'HDN.

Le Tableau 2 montre clairement le gain sur l'effet catalytique apporté par les enchaînements spécifiques selon l'invention. En effet, les enchaînements de catalyseurs selon l'invention permettent d'augmenter significativement les activités volumiques en réaction d'hydrodéaromatisation (HDA) et d'hydrodéazotation (HDN) des distillats sous vide.

**Tableau 2 : Activités relatives HDA et HDN pour les enchaînements spécifiques selon l'invention (exemples 4 et 5) et non conformes (exemples 6 à 8).**

| Exemple | Chargement catalyseur(s) dans le réacteur (première zone/deuxième zone) | RVA HDN | RVA HDA |
|---|---|---|---|
| 4 (selon l'invention) | 70% vol catalyseur C1 + 30 % vol catalyseur C2 | 104 | 105 |
| 5 (selon l'invention) | 50% vol catalyseur C1 + 50 % vol catalyseur C2 | 104 | 107 |
| 6 (non conforme) | 100% vol catalyseur C1 | 100 | 100 |
| 7 (non conforme) | 100% vol catalyseur C2 | 72 | 95 |
| 8 (non conforme) | 70% vol catalyseur C1 + 30 % vol catalyseur C3 | 90 | 101 |

## Revendications

1. Procédé d'hydrotraitement d'une charge hydrocarbonée dont au moins 50% poids des composés présentent un point d'ébullition initial supérieur à 300°C et un point d'ébullition final inférieur à 650°C, à une température comprise entre 180°C et 450°C, une pression comprise entre 0,5 et 30 MPa, une vitesse volumique horaire comprise entre 0,1 et 20 h⁻¹ et un rapport hydrogène/charge exprimé en volume d'hydrogène, mesuré dans les conditions normales de température et pression, par volume de charge liquide compris entre 50 L/L à 5000 L/L, de manière à obtenir un effluent hydrotraité, ledit procédé comportant les étapes suivantes :
a) une première étape d'hydrotraitement mise en œuvre dans une première section réactionnelle d'hydrotraitement, mettant en œuvre au moins un lit catalytique comprenant au moins un premier catalyseur d'hydrotraitement, ladite section réactionnelle d'hydrotraitement étant alimentée par au moins ladite charge hydrocarbonée et un flux gazeux comprenant de l'hydrogène, ledit premier catalyseur comprenant un support d'alumine, une phase active constituée de nickel et de molybdène, et du phosphore et éventuellement un composé organique contenant de l'oxygène et/ou de l'azote et/ou du soufre, et dans lequel le premier catalyseur a une teneur en molybdène comprise entre 5 et 40 % poids, exprimée en MoO₃, par rapport au poids total du catalyseur, une teneur en nickel comprise entre 1 et 10 % poids, exprimée en NiO, par rapport au poids total du catalyseur, et une teneur en phosphore comprise entre 0,1 et 20 % poids exprimée en P₂O₅ par rapport au poids total du catalyseur.
b) une deuxième étape d'hydrotraitement mise en œuvre dans une deuxième section réactionnelle d'hydrotraitement, mettant en œuvre au moins un lit catalytique comprenant au moins un deuxième catalyseur d'hydrotraitement, ladite section réactionnelle d'hydrotraitement étant alimentée par au moins une partie de l'effluent obtenu à l'étape a), ledit deuxième catalyseur comprenant un support de silice-alumine, une phase active constituée de nickel et de tungstène, du phosphore, et un composé organique contenant de l'oxygène et/ou de l'azote et/ou du soufre, et dans lequel
- la teneur en nickel, exprimée sous forme NiO, est comprise entre 1,3 et 4,3 % poids par rapport au poids total du catalyseur,
- la teneur en tungstène, exprimée sous forme WO₃, est comprise entre 17 et 31 % poids par rapport au poids total du catalyseur,
- la teneur en phosphore, exprimée sous forme P₂O₅, est de préférence comprise entre 1,3 et 3,4 % poids par rapport au poids total du catalyseur.
- le ratio molaire Ni/W est compris entre 0,18 et 0,45 mol/mol,
- le ratio molaire P/W est compris entre 0,18 et 0,45 mol/mol.

2. Procédé d'hydrotraitement selon la revendication 1, dans lequel ladite première section réactionnelle d'hydrotraitement contenant le premier catalyseur occupe un volume V1 , et ladite deuxième section réactionnelle d'hydrotraitement contenant le deuxième catalyseur occupe un volume V2, la répartition des volumes *V1N2* étant comprise entre 50%vol/50%vol et 90%vol/10%vol respectivement de ladite première et deuxième section réactionnelle d'hydrotraitement.

3. Procédé d'hydrotraitement selon la revendication 2, dans lequel la répartition des volumes V1/V2 est comprise entre 70%vol/30%vol et 80%vol/20%vol respectivement de ladite première et deuxième section réactionnelle d'hydrotraitement.

4. Procédé d'hydrotraitement selon l'une des revendications précédentes, dans lequel la teneur en silice dans le support du deuxième catalyseur est comprise entre 10 et 50% pds par rapport au poids total du support.

5. Procédé d'hydrotraitement selon l'une des revendications précédentes, dans lequel le premier catalyseur contient en outre un composé organique contenant de l'oxygène et/ou de l'azote et/ou du soufre.

6. Procédé d'hydrotraitement selon l'une des revendications précédentes, dans lequel le composé organique est choisi parmi un composé comportant une ou plusieurs fonctions chimiques choisies parmi une fonction carboxylique, alcool, thiol, thioéther, sulfone, sulfoxyde, éther, aldéhyde, cétone, ester, carbonate, amine, nitrile, imide, oxime, urée, amide ou encore les composés incluant un cycle furanique ou encore un sucre.

7. Procédé d'hydrotraitement selon la revendication 6, dans lequel le composé organique est choisi parmi la γ-valérolactone, la 2-acétylbutyrolactone, le triéthylèneglycol, le diéthylèneglycol, l'éthylèneglycol, l'acide éthylènediaminetétra-acétique (EDTA), l'acide maléique, l'acide malonique, l'acide citrique, l'acide acétique, l'acide oxalique, l'acide gluconique, le glucose, le fructose, le saccharose, le sorbitol, le xylitol, l'acide γ-cétovalérique, un succinate de dialkyle C1-C4 et plus particulièrement le succinate de diméthyle, le diméthylformamide, la 1-méthyl-2-pyrrolidinone, le carbonate de propylène, le 3-oxobutanoate de 2-méthoxyéthyle, la bicine, la tricine, le 2-furaldéhyde (aussi connu sous le nom furfural), le 5-hydroxyméthylfurfural, le 2-acétylfurane, le 5-méthyl-2-furaldéhyde, l'acide ascorbique, le lactate de butyle, le lactate d'éthyle, le butyryllactate de butyle, le 3-hydroxybutanoate d'éthyle, le 3-éthoxypropanoate d'éthyle, l'acétate de 2-éthoxyéthyle, l'acétate de 2-butoxyéthyle, l'acrylate de 2-hydroxyéthyle, la 1-vinyl-2-pyrrolidinone, la 1,3-diméthyl-2-imidazolidinone, le 1,5-pentanediol, la1-(2-hydroxyéthyl)-2-pyrrolidinone, la 1-(2-hydroxyéthyl)-2,5-pyrrolidinedione, la 5-méthyl-2(3H)-furanone, la 1-méthyl-2-pipéridinone, l'acide 4-aminobutanoïque, le glycolate de butyle, le 2-mercaptopropanoate d'éthyle, le 4-oxopentanoate d'éthyle, le maléate de diéthyle, le maléate de diméthyle, le fumarate de diméthyle, le fumarate de diéthyle, l'adipate de diméthyle et le 3-oxoglutarate de diméthyle.

8. Procédé d'hydrotraitement selon l'une des revendications 5 à 7, dans lequel la teneur en composé organique est comprise entre 1 et 30 % poids par rapport au poids total du catalyseur.

9. Procédé d'hydrotraitement selon l'une des revendications précédentes, dans lequel le premier et/ou le deuxième catalyseur est au moins partiellement sulfuré.

10. Procédé d'hydrotraitement selon l'une des revendications précédentes, lequel est mis en oeuvre comme prétraitement dans un procédé de craquage catalytique à lit fluidisé.

11. Procédé d'hydrotraitement selon l'une des revendications précédentes, lequel est mis en oeuvre comme prétraitement dans un procédé d'hydrocraquage.

## Patentansprüche

1. Verfahren zur Hydrobehandlung eines kohlenwasserstoffhaltigen Einsatzmaterials, bei dem mindestens 50 Gew.-% der Verbindungen einen anfänglichen Siedepunkt von mehr als 300 °C und einen finalen Siedepunkt von weniger als 650 °C aufweisen, bei einer Temperatur zwischen 180 °C und 450 °C, einem Druck zwischen 0,5 und 30 MPa, einer Raumgeschwindigkeit zwischen 0,1 und 20 h⁻¹ und einem Wasserstoff/Einsatzmaterial-Verhältnis, ausgedrückt als Wasserstoffvolumen, gemessen unter normalen Temperatur- und Druckbedingungen, je Volumen flüssigen Einsatzmaterials zwischen 50 l/l und 5000 l/l, so dass ein hydrobehandelter Abstrom erhalten wird, wobei das Verfahren die folgenden Schritte umfasst:
a) einen ersten Hydrobehandlungsschritt, der in einem ersten Hydrobehandlungsreaktionsabschnitt durchgeführt wird, der mindestens ein katalytisches Bett einsetzt, das mindestens einen ersten Hydrobehandlungskatalysator umfasst, wobei dem Hydrobehandlungsreaktionsabschnitt mindestens das kohlenwasserstoffhaltige Einsatzmaterial und ein Wasserstoff umfassender Gasstrom zugeführt werden, wobei der erste Katalysator einen Aluminiumoxidträger, eine aus Nickel und Molybdän bestehende aktive Phase und Phosphor und gegebenenfalls eine Sauerstoff und/oder Stickstoff und/oder Schwefel enthaltende organische Verbindung umfasst und wobei der erste Katalysator einen Molybdängehalt zwischen 5 und 40 Gew.-%, ausgedrückt als MoO₃, bezogen auf das Gesamtgewicht des Katalysators, einen Nickelgehalt zwischen 1 und 10 Gew.-%, ausgedrückt als NiO, bezogen auf das Gesamtgewicht des Katalysators und einen Phosphorgehalt zwischen 0,1 und 20 Gew.-%, ausgedrückt als P₂O₅, bezogen auf das Gesamtgewicht des Katalysators hat.
b) einen zweiten Hydrobehandlungsschritt, der in einem zweiten Hydrobehandlungsreaktionsabschnitt durchgeführt wird, der mindestens ein katalytisches Bett einsetzt, das mindestens einen zweiten Hydrobehandlungskatalysator umfasst, wobei dem Hydrobehandlungsreaktionsabschnitt mindestens ein Teil des im Schritt a) erhaltenen Abstroms zugeführt wird, wobei der zweite Katalysator einen Siliciumdioxid-Aluminiumoxid-Träger, eine aus Nickel und Wolfram bestehende aktive Phase, Phosphor und eine Sauerstoff und/oder Stickstoff und/oder Schwefel enthaltende organische Verbindung umfasst, und wobei
- der Nickelgehalt , ausgedrückt als NiO, zwischen 1,3 und 4,3 Gew.-% bezogen auf das Gesamtgewicht des Katalysators liegt,
- der Wolframgehalt, ausgedrückt als WO₃, zwischen 17 und 31 Gew.-% bezogen auf das Gesamtgewichts des Katalysators liegt,
- der Phosphorgehalt, ausgedrückt als P₂O₅, vorzugsweise zwischen 1,3 und 3,4 Gew.-% bezogen auf das Gesamtgewicht des Katalysators liegt.
- das Molverhältnis Ni/W zwischen 0,18 und 0,45 mol/mol liegt,
- das Molverhältnis P/W zwischen 0,18 und 0,45 mol/mol liegt.

2. Verfahren zur Hydrobehandlung nach Anspruch 1, wobei der erste Hydrobehandlungsreaktionsabschnitt, der den ersten Katalysator enthält, ein Volumen V1 einnimmt und der zweite Hydrobehandlungsreaktionsabschnitt, der den zweiten Katalysator enthält, ein Volumen V2 einnimmt, wobei die Verteilung der Volumina V1/V2 zwischen 50 Vol.- %/50 Vol.-% und 90 Vol.-%/10 Vol.-% des ersten bzw. zweiten Hydrobehandlungsreaktionsabschnitts liegt.

3. Verfahren zur Hydrobehandlung nach Anspruch 2, wobei die Verteilung der Volumina V1/V2 zwischen 70 Vol.- %/30 Vol.-% und 80 Vol.-%/20 Vol.-% des ersten bzw. zweiten Hydrobehandlungsreaktionsabschnitts liegt.

4. Verfahren zur Hydrobehandlung nach einem der vorhergehenden Ansprüche, wobei der Siliciumdioxidgehalt in dem Träger des zweiten Katalysators zwischen 10 und 50 Gew.-% bezogen auf das Gesamtgewicht des Katalysators liegt.

5. Verfahren zur Hydrobehandlung nach einem der vorhergehenden Ansprüche, wobei der erste Katalysator ferner eine Sauerstoff und/oder Stickstoff und/oder Schwefel enthaltende organische Verbindung enthält.

6. Verfahren zur Hydrobehandlung nach einem der dem vorhergehenden Ansprüche, wobei die organische Verbindung ausgewählt ist aus einer Verbindung, die eine oder mehrere chemische Funktionen umfasst, die aus einer Carboxyl-, Alkohol-, Thiol-, Thioether-, Sulfon-, Sulfoxid-, Ether-, Aldehyd-, Keton-, Ester-, Carbonat-, Amin-, Nitril-, Imid-, Oxim-, Harnstoff- und Amidfunktion ausgewählt ist, oder aber den Verbindungen, die einen Furanring oder auch einen Zucker beinhalten.

7. Verfahren zur Hydrobehandlung nach Anspruch 6, wobei die organische Verbindung ausgewählt ist aus γ-Valerolacton, 2-Acetylbutyrolacton, Triethylenglykol, Diethylenglykol, Ethylenglykol, Ethylendiaminetetraessigsäure (EDTA), Maleinsäure, Malonsäure, Zitronensäure, Essigsäure, Oxalsäure, Gluconsäure, Glucose, Fructose, Saccharose, Sorbitol, Xylitol, γ-Ketovaleriansäure, einem C1-C4-Dialkylsuccinat und insbesondere Dimethylsuccinat, Dimethylformamid, 1-Methyl-2-pyrrolidinon, Propylencarbonat, 2-Methoxyethyl-3-Oxobutanoat, Bicin, Tricin, 2-Furaldehyd (auch bekannt unter dem Namen Furfural), 5-Hydroxymethylfurfural, 2-Acetylfuran, 5-Methyl-2-furaldehyd, Ascorbinsäure, Butyllactat, Ethyllactat, Butylbutyryllactat, Ethyl-3-hydroxybutanoat, Ethyl-3-ethoxypropanoat, 2-Ethoxyethylacetat, 2-Butoxyethylacetat, 2-Hydroxyethylacrylat, 1-Vinyl-2-pyrrolidinon, 1,3-Dimethyl-2-imidazolidinon, 1,5-Pentandiol, 1-(2-Hydroxyethyl)-2-pyrrolidinon, 1-(2-Hydroxyethyl)-2,5-pyrrolidindion, 5-Methyl-2(3H)-Furanon, 1-Methyl-2-piperidinon, 4-Aminobutansäure, Butylglykolat, Ethyl-2-mercaptopropanoat, Ethyl-4-oxopentanoat, Diethylmaleat, Dimethylmaleat, Dimethylfumarat, Diethylfumarat, Dimethyladipat und Dimethyl-3-Oxoglutarat.

8. Verfahren zur Hydrobehandlung nach einem der Ansprüche 5 bis 7, wobei der Gehalt an organischer Verbindung zwischen 1 und 30 Gew.-% bezogen auf das Gesamtgewicht des Katalysators liegt.

9. Verfahren zur Hydrobehandlung nach einem der vorhergehenden Ansprüche, wobei der erste und/oder der zweite Katalysator zumindest teilweise schwefelhaltig ist.

10. Verfahren zur Hydrobehandlung nach einem der vorhergehenden Ansprüche, das als Vorbehandlung in einem katalytischen Wirbelbett-Crackverfahren eingesetzt wird.

11. Verfahren zur Hydrobehandlung nach einem der vorhergehenden Ansprüche, das als Vorbehandlung in einem Hydrocrackverfahren eingesetzt wird.

## Claims

1. Process for the hydrotreating of a hydrocarbon feedstock, at least 50% by weight of the compounds of which exhibit an initial boiling point of greater than 300°C and a final boiling point of less than 650°C, at a temperature of between 180°C and 450°C, a pressure of between 0.5 and 30 MPa, an hourly space velocity of between 0.1 and 20 h⁻¹ and a hydrogen/feedstock ratio, expressed as volume of hydrogen, measured under standard temperature and pressure conditions, per volume of liquid feedstock, of between 50 l/l and 5000 l/l, so as to obtain a hydrotreated effluent, said process comprising the following stages:
a) a first hydrotreating stage carried out in a first hydrotreating reaction section, employing at least one catalytic bed comprising at least one first hydrotreating catalyst, said hydrotreating reaction section being fed with at least said hydrocarbon feedstock and a hydrogen-comprising gas stream, said first catalyst comprising an alumina support, an active phase consisting of nickel and of molybdenum, and phosphorus and optionally an oxygen- and/or nitrogen- and/or sulfur-containing organic compound, and in which the first catalyst has a molybdenum content of between 5% and 40% by weight, expressed as MoO₃, with respect to the total weight of the catalyst, a nickel content of between 1% and 10% by weight, expressed as NiO, with respect to the total weight of the catalyst, and a phosphorus content of between 0.1% and 20% by weight, expressed as P₂O₅, with respect to the total weight of the catalyst,
b) a second hydrotreating stage carried out in a second hydrotreating reaction section, employing at least one catalytic bed comprising at least one second hydrotreating catalyst, said hydrotreating reaction section being fed with at least a part of the effluent obtained in stage a), said second catalyst comprising a silica-alumina support, an active phase consisting of nickel and of tungsten, phosphorus, and an oxygen- and/or nitrogen- and/or sulfur-containing organic compound, and in which:
- the content of nickel, expressed in the NiO form, is of between 1.3% and 4.3% by weight, with respect to the total weight of the catalyst,
- the content of tungsten, expressed in the WO₃ form, is of between 17% and 31% by weight, with respect to the total weight of the catalyst,
- the content of phosphorus, expressed in the P₂O₅ form, is preferably of between 1.3% and 3.4% by weight, with respect to the total weight of the catalyst,
- the Ni/W molar ratio is of between 0.18 and 0.45 mol/mol,
- the P/W molar ratio is of between 0.18 and 0.45 mol/mol.

2. Hydrotreating process according to Claim 1, in which said first hydrotreating reaction section containing the first catalyst occupies a volume V1 and said second hydrotreating reaction section containing the second catalyst occupies a volume V2, the distribution of the volumes V1/V2 being of between 50% vol/50% vol and 90% vol/10% vol respectively of said first and second hydrotreating reaction section.

3. Hydrotreating process according to Claim 2, in which the distribution of the volumes V1/V2 is of between 70% vol/30% vol and 80% vol/20% vol respectively of said first and second hydrotreating reaction section.

4. Hydrotreating process according to one of the preceding claims, in which the silica content in the support of the second catalyst is of between 10% and 50% by weight, with respect to the total weight of the support.

5. Hydrotreating process according to one of the preceding claims, in which the first catalyst additionally contains an oxygen- and/or nitrogen- and/or sulfur-containing organic compound.

6. Hydrotreating process according to one of the preceding claims, in which the organic compound is chosen from a compound comprising one or more chemical functions chosen from a carboxyl, alcohol, thiol, thioether, sulfone, sulfoxide, ether, aldehyde, ketone, ester, carbonate, amine, nitrile, imide, oxime, urea or amide function or also compounds including a furan ring or also a sugar.

7. Hydrotreating process according to Claim 6, in which the organic compound is chosen from γ-valerolactone, 2-acetylbutyrolactone, triethylene glycol, diethylene glycol, ethylene glycol, ethylenediaminetetraacetic acid (EDTA), maleic acid, malonic acid, citric acid, acetic acid, oxalic acid, gluconic acid, glucose, fructose, sucrose, sorbitol, xylitol, γ-ketovaleric acid, a di(C₁-C₄ alkyl) succinate and more particularly dimethyl succinate, dimethylformamide, 1-methyl-2-pyrrolidinone, propylene carbonate, 2-methoxyethyl 3-oxobutanoate, bicine, tricine, 2-furaldehyde (also known under the name furfural), 5-hydroxymethylfurfural, 2-acetylfuran, 5-methyl-2-furaldehyde, ascorbic acid, butyl lactate, ethyl lactate, butyl butyryllactate, ethyl 3-hydroxybutanoate, ethyl 3-ethoxypropanoate, 2-ethoxyethyl acetate, 2-butoxyethyl acetate, 2-hydroxyethyl acrylate, 1-vinyl-2-pyrrolidinone, 1,3-dimethyl-2-imidazolidinone, 1,5-pentanediol, 1-(2-hydroxyethyl)-2-pyrrolidinone, 1-(2-hydroxyethyl)-2,5-pyrrolidinedione, 5-methyl-2(3H)-furanone, 1-methyl-2-piperidinone, 4-aminobutanoic acid, butyl glycolate, ethyl 2-mercaptopropanoate, ethyl 4-oxopentanoate, diethyl maleate, dimethyl maleate, dimethyl fumarate, diethyl fumarate, dimethyl adipate and dimethyl 3-oxoglutarate.

8. Hydrotreating process according to one of Claims 5 to 7, in which the content of organic compound is of between 1% and 30% by weight, with respect to the total weight of the catalyst.

9. Hydrotreating process according to one of the preceding claims, in which the first and/or the second catalyst is at least partially sulfur-based.

10. Hydrotreating process according to one of the preceding claims, which is carried out as pretreatment in a fluidized bed catalytic cracking process.

11. Hydrotreating process according to one of the preceding claims, which is carried out as pretreatment in a hydrocracking process.
